(19) Europäisches Patentamt
European Patent Office
Office européen des brevets

(11) Veröffentlichungsnummer: **0 069 376**
**B1**

(12) # EUROPÄISCHE PATENTSCHRIFT

(45) Veröffentlichungstag der Patentschrift: **25.09.85**

(51) Int. Cl.⁴: **C 09 B 62/095**, C 09 B 62/515

(21) Anmeldenummer: **82105988.8**

(22) Anmeldetag: **05.07.82**

(54) **Kupferkomplex-Monoazoverbindungen, Verfahren zu ihrer Herstellung und ihre Verwendung als Farbstoffe.**

(30) Priorität: **08.07.81 DE 3126909**

(43) Veröffentlichungstag der Anmeldung: **12.01.83 Patentblatt 83/2**

(45) Bekanntmachung des Hinweises auf die Patenterteilung: **25.09.85 Patentblatt 85/39**

(84) Benannte Vertragsstaaten: **CH DE FR GB IT LI**

(56) Entgegenhaltungen:
**EP - A - 0 026 913**
**EP - A - 0 040 790**
**DE - B - 1 265 698**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**

**EP 0 069 376 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung liegt auf dem technischen Gebiet der faserreaktiven Kupferkomplex-Monoazofarbstoffe.

Aus der Europäischen Patentanmeldungs-Veröffentlichung Nr. 0026913 ist ein Kupferkomplex-Naphthylazonaphthyl-Farbstoff bekannt, der Fasermaterialien in rein blauer Nuance färbt. Es war wünschenswert, weitere Farbstoffe mit dieser Nuance zu finden, die jedoch farbtiefere Färbungen und somit eine bessere Farbausbeute liefern.

Mit der vorliegenden Erfindung wurden neue wasserlösliche Kupferkomplex-Monoazoverbindungen der allgemeinen Formel (1)

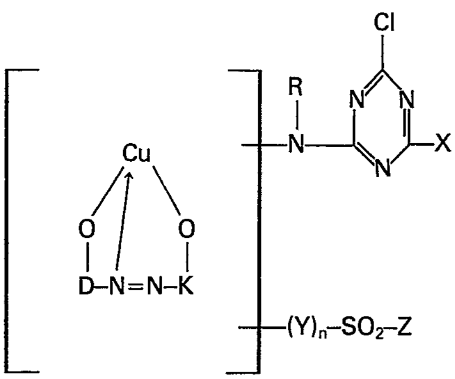

(1)

gefunden, in welcher

D den Rest einer Diazokomponente der Benzol- oder Naphthalinreihe bedeutet, deren metallkomplexbindende Hydroxygruppe bzw. Oxygruppe in ortho-Stellung zur Azobrücke steht,

K den Rest einer Kupplungskomponente der Benzol-, Naphthalin-, Pyridon- oder Pyrazolon-Reihe mit einer phenolischen oder enolischen, das Kupfer komplex bindenden Hydroxygruppe bzw. Oxygruppe darstellt, an welche die Azogruppe in ortho-Stellung bzw. benachbart zu dieser phenolischen oder enolischen Hydroxygruppe bzw. Oxygruppe gekuppelt ist,

R ein Wasserstoffatom oder eine Alkylgruppe von 1 bis 4 C-Atomen ist,

Y den bivalenten Rest einer Aminogruppe, einer niederen Alkylaminogruppe oder die Methylengruppe bedeutet,

n für die Zahl Null oder 1 steht,

Z die Vinyl-, die β-Acetoxyäthyl-, eine β-Thiosulfatoäthyl-, die β-Chloräthyl und bevorzugt eine β-Sulfatoäthyl-Gruppe bedeutet und

X für einen Rest der allgemeinen Formel (2a), (2b) oder (2c)

$$—O–R^1, \qquad (2a)$$

$$—S–R^1, \qquad (2b)$$

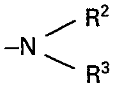

(2c)

steht, in welchen

$R^1$ einen gegebenenfalls substituierten, verzweigten oder unverzweigten Alkylrest, einen gegebenenfalls substituierten Arylrest oder einen gegebenenfalls substituierten heteroaromatischen Rest bedeutet,

$R^2$ ein Wasserstoff oder ein gegebenenfalls substituierter, verzweigter oder unverzweigter Alkylrest oder ein cycloaliphatischer Rest ist und

$R^3$ ein Wasserstoffatom oder ein gegebenenfalls substituierter, verzweigter oder unverzweigter Alkylrest oder ein gegebenenfalls substituierter Arylrest, bedeutet, wobei

$R^2$ und $R^3$ gleich oder verschieden voneinander sein können, oder worin

$R_2$ und $R_3$ zusammen mit dem Stickstoffatom einen gegebenenfalls ein weiteres Heteroatom, wie Stickstoff- oder Sauerstoffatom, enthaltenden heterocyclischen, gesättigten Ring bilden.

Die in der allgemeinen Formel (1) befindlichen Gruppen der Formeln (3) und (4)

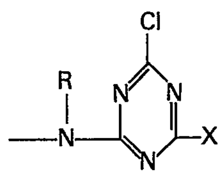

(3)

$$—(Y)_n–SO_2–Z \qquad (4)$$

mit R, X, Y, Z und n der obengenannten Bedeutung sind an den Rest D und an den Rest K, entweder voneinander getrennt oder beide gleichzeitig an D oder K, gebunden, wobei hiervon diejenigen erfindungsgemässen Kupferkomplex-Monoazoverbindungen der allgemeinen Formel (1) bevorzugt sind, die den Chlortriazinylamino-Rest der allgemeinen Formel (3) an den Rest der Kupplungskomponente K und den Rest der allgemeinen Formel (4) an den Rest der Diazokomponente D gebunden enthalten.

Die Reste D und K können Substituenten enthalten, wie sie beispielsweise bei wasserlösslichen Azofarbstoffen üblich sind, so beispielsweise insbesondere Alkoxygruppen von 1 bis 4 C-Atomen, wie die Methoxy-, Äthoxy-, Propyloxy-, Isopropyloxy- und Butoxygruppe, Alkylgruppen von 1 bis 4 C-Atomen, wie insbesondere die Methyl- und Äthylgruppe, Halogenatome, wie Fluor-, Chlor- und Bromatome, die Hydroxygruppe, die Carboxygruppe, die Nitrogruppe, niedere Alkylgruppen, die substituiert sein können, wie beispielsweise durch eine Hydroxy-, Sulfato-, Sulfo-, Carboxy- oder eine niedere Alkoxygruppe, Acylaminogruppen von aliphatischen Carbonsäuren von 2 bis 6 C-Atomen oder von aromatischen Carbonsäuren, wie der Benzoesäure, so insbesondere Acetylamino-, Propionylamion- und Benzoylaminogruppen, Sulfonsäuregruppen, Sulfamoyl- und Carbamoylgruppen, die jeweils am Stickstoffatom durch niedere Alkylgruppen, gegebenenfalls substituierte Benzyl- und gegebenenfalls substituierte Phenylreste mono- oder disubstituiert sein können, sowie die Cyangruppe. Der Formelrest K kann auch

Amino-, niedere Alkylamino-, Aminophenyl- und niedere Aminoalkyl-Reste als Substituenten enthalten.

Die erfindungsgemässen Verbindungen können in Form ihrer freien Säure als auch, bevorzugt, in Form ihrer Salze, insbesondere neutralen Salze, vorliegen. Als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben von Fasermaterialien.

Die Angabe «niedere» bedeutet hier wie im folgenden, dass der in der so bezeichneten Gruppe enthaltene Alkyl- oder Alkylenrest oder Alkenylrest aus 1 bis 6 bzw. 2 bis 6 C-Atomen, bevorzugt aus 1 bis 4 bzw. 2 bis 4 C-Atomen, besteht.

Die für die Formelreste $R^1$, $R^2$ und $R^3$ erwähnten gegebenenfalls substituierten Alkylreste sind bevorzugt niedere Alkylreste, die unsubstituiert oder substituiert sein können. Substituierte niedere Alkylreste sind beispielsweise verzweigte oder unverzeigte Alkylgruppen von 1 bis 4 C-Atomen, die durch einen oder zwei Substituenten aus der Gruppe Acetylamino, Hydroxy, Sulfato, β-Sulfatoäthylsulfonyl, β-Thiosulfatoäthylsulfonyl, niederes Alkoxy, Sulfo, Carboxy, Phenyl, Naphthyl, durch Sulfo, Carboxy, β-Sulfatoäthylsulfonyl, β-Thiosulfatoäthylsulfonyl, Methyl, Äthyl, Methoxy, Äthoxy, Chlor, Sulfomethyl, Ureido, Sulfamoyl und/oder Carbamoyl substituiertes Phenyl und durch Sulfo, Carboxy, β-Sulfatoäthylsulfonyl,β-Thiosulfatoäthylsulfonyl, Sulfomethyl, Ureido, Acetylamino, Sulfamoyl und/oder Carbamoyl substituiertes Naphthyl substituiert sind. – Ein cycloaliphatischer Rest ist bevorzugt ein Cyclopentyl- oder insbesondere Cyclohexylrest, die durch 1, 2 oder 3 Methylgruppen substituiert sein können. – Arylreste sind vorzugsweise die Phenyl- und Naphthylreste, die substituiert oder unsubstituiert sein können, beispielsweise durch Substituenten aus der Gruppe Carboxy, Sulfo, niederes Alkyl, niederes Alkoxy, Hydroxy, Chlor, Brom, Sufomethyl, Acetylamino, Benzoylamino, β-Sulfatoäthylsulfonyl, Carbamoyl, Sulfamoyl, Ureido, Amino und niederes Alkylamino. Aromatische heterocyclische Reste sind beispielsweise der Benzthiazolylrest, der im carbocyclischen Kern durch Methyl, Methoxy, Äthoxy, Sulfo oder Sulfamoyl substituiert sein kann.

Heterocyclische Reste, die die Formelglieder $R^2$ und $R^3$ zusammen mit dem Stickstoffatom bilden können, sind beispielsweise der Morpholino-, Piperidino- und Piperazino-Rest.

Beispiele für gegebenenfalls substituierte Alkylgruppen, die für den Formelrest $R^1$ stehen, sind die Methyl-, Äthyl-, Propyl-, Isopropyl-, Methoxymethyl-, Methoxyäthyl- und Äthoxyäthyl-Gruppe. Beispiele für gegebenenfalls substituierte Arylreste, die für $R^1$ stehen können, sind die Phenyl-, 4-Chlorphenyl- und 4-Methoxyphenyl-Reste.

Als Beispiele für den Aminorest der allgemeinen Formel (2c) seien die folgenden Gruppen genannt: Amino, Methylamino, Äthylamino, Propylamino, Isopropylamino, Butylamino, β-Methoxyäthylamino, Dimethylamino, Diäthylamino, Benzylamino, β-Chloräthylamino, β-Hydroxyäthylamino, Cyclohexylamino, Morpholino, Piperidino, Piperazino und insbesondere arylsubstituierte Aminogruppen, wie Phenylamino, N-Methyl-N-phenylamino, Toluidino, Xylidino, Chloranilino, Anisidino, Phenetidino, Sulfoanilino, 3-(β-Sulfatoäthylsulfonyl)-anilino, Disulfoanilino, Sulfomethylanilino, N-Sulfomethylanilino, Carboxyphenylamino, 2-Carboxy-5- oder -4-sulfophenylamino und Sulfonaphthylamino, wie beispielsweise 4-Sulfonaphthyl-(1)-amino, 3,6-Disulfonaphthyl-(1)-amino- und 3,6,8-Trisulfonaphthyl-(1)-amino.

Die vorliegende Erfindung betrifft weiterhin Verfahren zur Herstellung der Verbindungen der allgemeinen Formel (1). Die Synthese der neuen Kupferkomplex-Monoazoverbindungen kann in erfindungsgemässer Weise erfolgen, indem man eine Kupferkomplex-Monoazoverbindung der allgemeinen Formel (5)

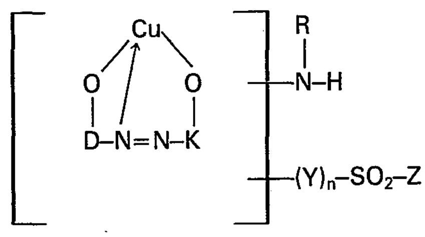

(5)

in welcher D, K, R, Y, Z und n die obengenannten Bedeutungen haben, wobei die Gruppen der allgemeinen Formel (4) und der allgemeinen Formel –NHR an D und K, getrennt oder gleichzeitig hieran, gebunden sind, in äquimolarer Menge mit einer 2,4-Dichlor-s-triazin-Verbindung der allgemeinen Formel (6)

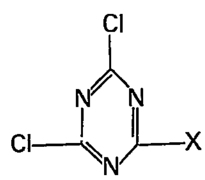

(6)

in welcher X die obengenannte Bedeutung besitzt, umsetzt oder indem man bevorzugt eine Kupferkomplex-Monoazoverbindung der allgemeinen Formel (5) in äquimolarer Menge mit 2,4,6-Trichlor-s-triazin umsetzt und die so hergestellte Dichlortriazinylamino-Verbindung der allgemeinen Formel (7)

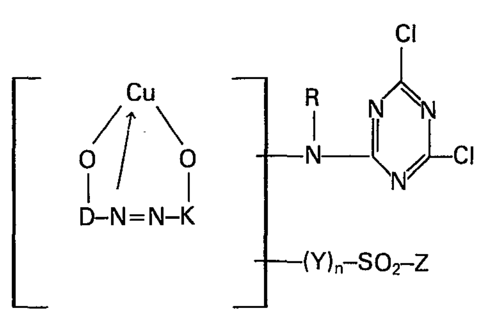

(7)

in welcher D, K, R, Y, Z und n die obengenannten Bedeutungen haben, wobei die Reste entsprechend der oben angegebenen allgemeinen Formel (4) und der nachstehenden allgemeinen Formel (9)

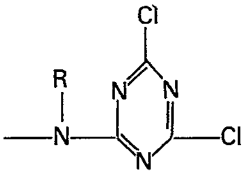

(9)

mit R der obengenannten Bedeutung an D und K, getrennt voneinander oder gleichzeitig an D oder K, gebunden sind, in äquimolarer Menge mit einem Amin der allgemeinen Formel (8)

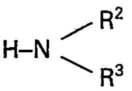

(8)

in welcher $R^2$ und $R^3$ die obengenannten Bedeutungen haben, kondensiert.

Die Verbindungen der allgemeinen Formel (1) können auch in erfindungsgemässer Weise so hergestellt werden, dass man eine Verbindung der allgemeinen Formel (10)

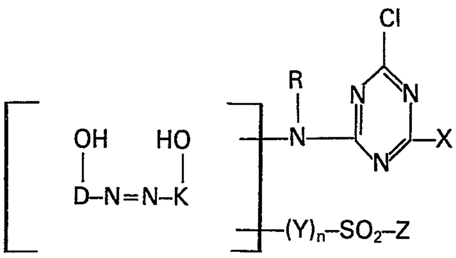

(10)

in welcher D, K, R, X, Y, Z und n die obengenannten Bedeutungen besitzen, wobei die Reste entsprechend den allgemeinen Formeln (3) und (4) an D und K, getrennt voneinander oder gleichzeitig an D oder K, gebunden sind, mit einem kupferabgebenden Mittel in an und für sich bekannter Weise in die Kupferkomplexverbindung überführt. Kupferabgebende Mittel sind beispielsweise die Salze des Kupfers, wie Kupfersulfat, Kupferchlorid und Kupferacetat.

Die Umsetzung der Kupferkomplex-Monoazoverbindungen der allgemeinen Formel (5) oder der allgemeinen Formel (7) mit Cyanurchlorid bzw. mit einem Amin der allgemeinen Formel (8) wird in der Regel in wässrigem Medium, gegebenenfalls unter Mitverwendung eines organischen Lösemittels, bei einer Temperatur zwischen 0 und 50°C, vorzugsweise zwischen 10 und 30°C, und bei einem pH-Wert zwischen 4 und 7, vorzugsweise zwischen 5,5 und 6,8, durchgeführt. Die bei den Kondensationsreaktionen frei werdende Chlorwasserstoffsäure wird mit einem säurebindenden Mittel, wie beispielsweise Natrium- oder Kaliumhydroxid, vorzugsweise Natrium- oder Kaliumcarbonat, Natrium- oder Kaliumbicarbonat, Natriumacetat oder einem basischen Natriumphosphat, gebunden.

Die Synthese der als Ausgangsverbindung dienenden Kupferkomplex-Monoazoverbindung der allgemeinen Formel (5) lässt sich in an und für sich bekannter Weise durchführen, so beispielsweise, indem man eine Monoazoverbindung der allgemeinen Formel (11)

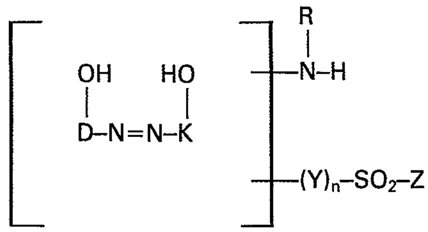

(11)

in welcher D, K, R, Y, Z und n die obengenannten Bedeutungen haben, wobei die Reste der allgemeinen Formeln (4) und –NHR an D und K, getrennt voneinander oder gleichzeitig an D oder K, gebunden sind, mit einem kupferabgebenden Mittel in die Verbindung der allgemeinen Formel (5) überführt oder, indem man eine Monoazoverbindung der allgemeinen Formel (12)

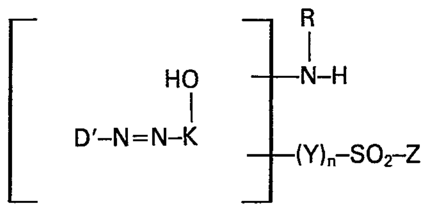

(12)

in welcher D' den Rest einer Diazokomponente der Benzol- oder Naphthalin-Reihe mit einem Wasserstoffatom in ortho-Stellung zur Azogruppe bedeutet und R, Y, Z und n die obengenannten Bedeutungen besitzen, wobei die Reste der allgemeinen Formeln (4) und –NHR an D' und K, getrennt voneinander oder gleichzeitig an D' oder K, gebunden sind, mit einem kupferabgebenden Mittel in Gegenwart eines oxidierenden Mittels in die Verbindungen der allgemeinen Formel (5) überführt oder, indem man eine Monoazoverbindung der allgemeinen Formel (13)

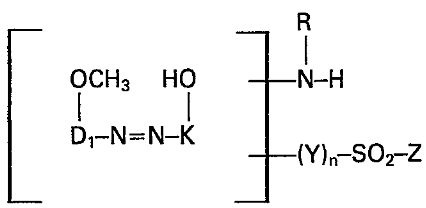

(13)

in welcher $D_1$ den Rest einer Diazokomponente der Benzol- oder Naphthalin-Reihe mit der Methoxygruppe in ortho-Stellung zur Azobrücke bedeutet und R, Y, Z und n die obengenannten Bedeutungen besitzen, wobei die Reste der allgemeinen Formeln (4) und –NHR an $D_1$ und K, getrennt voneinander oder gleichzeitig an $D_1$ oder K, gebunden sind, einer entalkylierenden Kupferreaktion unterwirft.

Die Ausgangsverbindungen der allgemeinen Formel (5) können auch so hergestellt werden, indem man zunächst eine Monoazoverbindung der allgemeinen Formel (14)

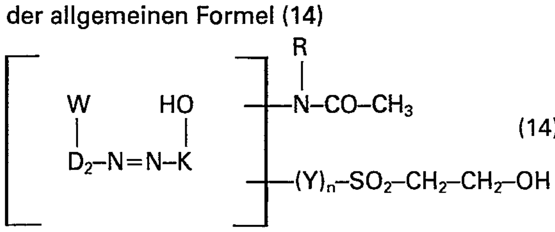

(14)

in welcher $D_2$ den Rest einer Diazokomponente der Benzol- oder Naphthalin-Reihe bedeutet, in der der Formelrest W in ortho-Stellung zur Azogruppe gebunden ist und ein Wasserstoffatom, die Hydroxy- oder Methoxygruppe bedeutet und K, R, Y und n die obengenannten Bedeutungen haben, wobei die in Formel (14) angegebenen Acetylamino- und β-Hydroxyäthylsulfonyl-Reste an $D_2$ und K, getrennt voneinander oder gleichzeitig an $D_2$ oder K, gebunden sind, in an und für sich bekannter Weise, wie oben für die Ausgangsverbindungen der allgemeinen Formeln (11), (12) und (13), durch einfache Kupferung oder durch oxidative Kupferung oder durch entalkylierende Kupferung in die Kupferkomplexverbindungen der allgemeinen Formel (15)

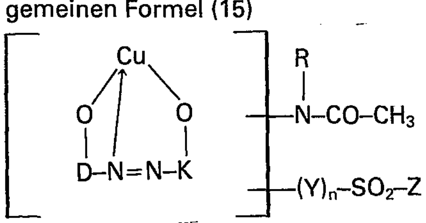

(15)

in welcher D, K, R, Y, Z und n die genannten Bedeutungen haben und die Acetylamino- und β-Hydroxyäthylsulfonyl-Reste an D und K, getrennt voneinander oder gleichzeitig an D oder K, gebunden sind, überführt; die Verbindungen der allgemeinen Formel (15) mit der β-Hydroxyäthylsulfonyl-Gruppe können sodann analog in an und für sich bekannten Verfahrensweisen unter Verseifung (Hydrolyse) der Acetylaminogruppe und Sulfatierung (Veresterung) dieser Hydroxygruppe in der β-Hydroxyäthylsulfonyl-Gruppe in Verbindungen der allgemeinen Formel (5) übergeführt werden, in welcher hier Z für den β-Sulfatoäthyl-Rest steht.

Die Ausgangsverbindungen der allgemeinen Formel (10) lassen sich in an und für sich üblicher Weise durch Diazotierung des entsprechenden als Diazokomponente dienenden Aminophenols, das den Rest der allgemeinen Formeln (3) oder (4) oder beide enthält oder enthalten kann, und Kupplung der Diazoniumverbindung mit der entsprechenden Kupplungskomponente, die den Rest der allgemeinen Formeln (3) oder (4) oder beide enthält oder enthalten kann, herstellen, wobei natürlich diese beiden Komponenten so ausgewählt werden, dass sie zusammen einen Rest der Formel (3) und einen Rest der Formel (4) besitzen.

Aromatische Amine, die als Diazokomponenten zur Herstellung der als Ausgangsverbindungen dienenden Monoazoverbindungen der allgemeinen Formeln (11) bis (14) eingesetzt werden können, sind beispielsweise:

4-Amino-phenyl-β-hydroxyäthylsulfon, 4-Amino-phenyl-β-sulfatoäthylsulfon, 3-Amino-phenyl-β-hydroxyäthylsulfon, 3-Amino-phenyl-β-sulfatoäthylsulfon, 3-Amino-4-hydroxy-phenyl-β-hydroxyäthylsulfon, 3-Amino-4-hydroxy-phenyl-β-sulfatoäthylsulfon, 3-Amino-4-hydroxy-phenyl-β-thiosulfatoäthylsulfon, 3-Amino-4-hydroxy-phenyl-vinylsulfon, 3-Amino-4-hydroxy-phenyl-β-acetoxyäthylsulfon, 3-Amino-4-hydroxy-phenyl-β-chloräthylsulfon, 4-Amino-5-hydroxy-phenyl-β-hydroxyäthylsulfon, 4-Amino-5-hydroxy-phenyl-β-sulfatoäthylsulfon, 4-Amino-5-hydroxy-phenyl-vinylsulfon, 4-Aminobenzyl-β-hydroxyäthylsulfon, 3-Amino-benzyl-β-sulfatoäthylsulfon, 4-Amino-N-(β-sulfatoäthylsulfonyl)-amino-benzol, 4-Amino-N-methyl-N-(β-sulfatoäthylsulfonyl)-amino-benzol, 4-Amino-N-äthyl-N-(β-sulfatoäthylsulfonyl)-amino-benzol, 3-Amino-4-methoxy-phenyl-β-hydroxyäthylsulfon, 3-Amino-4-methoxy-phenyl-β-sulfatoäthylsulfon, 4-Amino-2,5-dimethoxy-phenyl-β-sulfatoäthylsulfon, 4-Amino-2-methyl-5-methoxy-phenyl-β-sulfatoäthylsulfon, 3-Amino-4-hydroxy-5-nitro-phenyl-β-sulfatoäthylsulfon, 3-Amino-4-hydroxy-5-sulfo-phenyl-β-sulfatoäthylsulfon, 3-Amino-4-hydroxy-5-chlor-phenyl-β-sulfatoäthylsulfon, 7-Amino-3-sulfo-naphthyl-(1)-β-sulfatoäthylsulfon, 7-Amino-naphthyl-(1)-β-hydroxyäthylsulfon, 6-Amino-naphthyl-(2)-β-sulfatoäthylsulfon, 4-Amino-naphthyl-(1)-β-sulfatoäthylsulfon, 6-Amino-naphthyl-(1)-β-sulfatoäthylsulfon, 5-Amino-naphthyl-(2)-β-sulfatoäthylsulfon, 8-Amino-naphthyl-(2)-β-sulfatoäthylsulfon, 2-Amino-6-acetylamino-phenol-4-sulfonsäure, 2-Amino-4-acetylamino-phenol-6-sulfonsäure, 2-Amino-4-acetylamino-phenol, 2-Amino-4-chlor-6-acetylamino-phenol und 1-Amino-6-acetylamino-2-hydroxy-naphthalin-4-sulfonsäure.

Verbindungen mit einer phenolischen oder enolischen Hydroxygruppe, die als Kupplungskomponenten zur Herstellung der als Ausgangsverbindungen dienenden Azoverbindungen der allgemeinen Formeln (11) bis (14) eingesetzt werden können, sind beispielsweise:

1-Amino-8-hydroxy-naphthalin-3,6-disulfonsäure, 1-Acetylamino-8-hydroxy-naphthalin-3,6-disulfonsäure, 1-Amino-8-hydroxy-naphthalin-4,6-disulfonsäure, 1-Acetylamino-8-hydroxy-naphthalin-4,6-disulfonsäure, 2-Amino-5-hydroxy-naphthalin-7-sulfonsäure, 2-Methylamino-5-hydroxy-naphthalin-7-sulfonsäure, 2-Butylamino-5-hydroxy-naphthalin-7-sulfonsäure, 2-Amino-5-hydroxy-naphthalin-1,7-disulfonsäure, 2-Amino-8-hydroxy-naphthalin-6-sulfonsäure, 2-Acetylamino-8-hydroxy-naphthalin-6-sulfonsäure, 2-Amino-8-hydroxy-naphthalin-3,6-disulfonsäure, 2-Amino-3-hydroxy-naphthalin-6-sulfonsäure, 2-Amino-3-hydroxy-naphthalin-6,7-disulfonsäure, 1-(2'-Methyl-3'-amino-5'-sulfophenyl)-3-methyl-pyrazolon-5, 1-(2'-Sulfo-4'-aminophenyl)-3-methyl-pyrazolon-5, 1-(2'-Methyl-3'-amino-5'-sulfophenyl)-3-carboxy-pyrazolon-5, 1-(3'- oder 4'-Aminophenyl)-3-carboxy-pyrazolon-5, 1-(3'- oder 4'-Aminophenyl)-3-methyl-pyrazolon-5, 1-(2'-Sulfo-4'-aminophenyl)-3-carbäthoxy-pyrazolon-5, 1-Hydroxy-naphthyl-4-β-sulfatoäthylsulfon, 1-Hydroxy-naphthyl-5-β-sulfatoäthylsulfon, 2-[N-Methyl-N-(β-sulfatoäthylsulfonyl)-amino]-8-hydroxy-naphthalin-6-sulfonsäure, 2-[N-Methyl-N-(β-sulfatoäthylsulfonyl)-amino]-5-hydroxynaphthalin-7-sulfonsäure, 1-[4'-Methyl-N-β-chloräthylsulfonyl-amino]-benzoylamino-8-naphthol-3,6-disulfonsäure, 1-(3'-Aminophenyl)-3-sulfomethyl-4-methyl-6-hydroxy-pyridon-2, 1-(4'-Aminophenyl)-3-carbonamido-4-methyl-6-hydroxy-pyridon-2 und 1-(β-Aminoäthyl)-3-cyan-4-methyl-6-hydroxy-pyridon-2.

Ausgangsverbindungen entsprechend der allgemeinen Formel (6), die zur Herstellung der erfindungsgemässen Kupferkomplex-Monoazoverbindungen dienen können, sind beispielsweise:

2,6-Dichlor-4-methoxytriazin, 2,6-Dichlor-4-methoxyäthoxytriazin, 2,6-Dichlor-4-äthoxytriazin, 2,6-Dichlor-4-phenoxytriazin, 2,6-Dichlor-4-(3'- oder 4'-sulfophenyl)-oxytriazin, 2,6-Dichlor-4-(4'-methylphenyl)-mercapto-triazin, 2,6-Dichlor-4-äthylmercapto-triazin und 2,6-Dichlor-4-phenylmercapto-triazin sowie die primären Kondensationsprodukte aus 2,4,6-Trichlor-s-triazin und den folgenden, der allgemeinen Formel (8) entsprechenden Aminoverbindungen:

Ammoniak, Methylamin, Dimethylamin, Äthylamin, Diäthylamin, Propylamin, Isopropylamin, Butylamin, Dibutylamin, Isobutylamin, sek. oder tert. Butylamin, Methoxyäthylamin, Hydroxyäthylamin, Dihydroxyäthylamin, Aminoäthansulfonsäure, N-Methyl-aminoäthansulfonsäure, β-Sulfatoäthylamin, Benzylamin, Cyclohexylamin, Anilin, m- und p-Toluidin, 2,3-, 2,5-, 2,6- und 3,5-Dimethylanilin, 3- und 4-Chloranilin, N-Äthylanilin, 3- oder 4-Acetylaminoanilin, Anilin-4-β-sulfatoäthylsulfon, Anilin-4-vinylsulfon, Anilin-3-vinylsulfon, 2-Methoxyanilin-5-β-sulfatoäthylsulfon, 3- und 4-Aminophenol, 2,5-Dimethoxyanilin, m- und p-Anisidin, m- und p-Phenetidin, 2-Methoxy-5-methylanilin, 2-Äthoxy-5-methoxy-anilin, 4-Bromanilin, 3-Aminobenzamid, 4-Aminophenylsulfamid, 3- und 4-Aminophenylharnstoff, 1-Naphthylamin, 1-Amino-4-hydroxynaphthalin, 1-Amino-2-hydroxynaphthalin, Anilin-3- oder -4-sulfonsäure, Anilin-2,4-disulfonsäure, Anilin-2,5-disulfonsäure, Anilin-3,5-disulfonsäure, 3- und 4-Aminobenzoesäure, 4-Aminophenylmethansulfonsäure, Anilin-N-methansulfonsäure, 2-Aminotoluol-4-sulfonsäure, 2-Aminotoluol-5-sulfonsäure, 4-Aminosalicylsäure, 1-Amino-4-carboxybenzol-3-sulfonsäure, 1-Amino-2-carboxy-benzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,8- und -5,8-disulfonsäure, 2-Naphthylamin-1,5-, -1,6-, -1,7-, -3,6-, -3,7-, -4,7- -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, Morpholin, Piperidin und Piperazin.

Von den erfindungsgemässen Kupferkomplex-Monoazoverbindungen der allgemeinen Formel (1) sind bevorzugt diejenigen zu nennen, die der allgemeinen Formel (16)

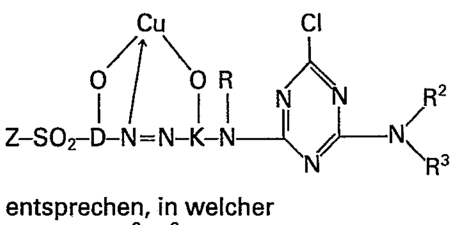 (16)

entsprechen, in welcher

D, K, R, $R^2$, $R^3$ und Z die obengenannten Bedeutungen besitzen, wobei

Z bevorzugt die β-Sulfatoäthyl-Gruppe bedeutet. Insbesondere bedeutet in der Formel (16) der Formelrest

D den Benzolkern, der durch einen oder zwei Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Sulfobenzoylamino, Carbamoyl, durch niederes Alkyl, Benzyl und/oder Phenyl mono- oder disubstituiertes Carbamoyl, Sulfamoyl, durch niederes Alkyl, Benzyl und/oder Phenyl mono- oder disubstituiertes Sulfamoyl, Cyan, Nitro, Chlor, Brom und Sulfo angehören, insbesondere aber bevorzugt der Gruppe Sulfo, niederes Alkyl, wie insbesondere Methyl, niederes Alkoxy, wie insbesondere Methoxy, und Chlor angehören. Insbesondere ist weiterhin

D in Formel (16) ein Naphthalinkern, der durch Sulfogruppen, bevorzugt 1 oder 2 Sulfogruppen, substituiert sein kann. Weiterhin bedeutet in Formel (16) der Formelrest

K insbesondere den Naphthalinkern, der durch 1 oder 2 Sulfonsäuregruppen substituiert sein kann, oder den Rest des Pyrazol-4,5-ylens mit der Azogruppe in 5-Stellung oder bevorzugt in 4-Stellung, der in 3-Stellung durch Methyl, Carboxy, Carbamoyl, niederes Carbalkoxy, wie Carbomethoxy und Carbäthoxy, Phenyl oder Sulfophenyl substituiert ist und in 1-Stellung einen Phenylenrest oder Naphthylenrest gebunden enthält, wobei der Phenylkern durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein kann, oder

K bedeutet den Rest der Formel

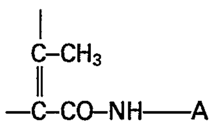

oder

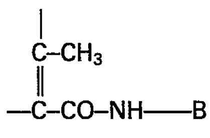

wobei der Phenylrest

A durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl, Benzyl und/oder Phenyl mono- oder disubstituiertes Carbamoyl, Sulfamoyl, durch niederes Alkyl, Benzyl und/oder Phenyl mono- oder

disubstituiertes Sulfamoyl, Cyan, Nitro, Chlor, Brom, Trifluormethyl und Sulfo angehören und der Naphthylrest

B durch 1, 2 oder 3 Sulfogruppen substituiert sein kann, wobei in

K der Chlortriazinylaminorest an einem der aromatischen Kerne von K gebunden ist. Weiterhin bedeutet in Formel (16)

$R^2$ insbesondere ein Wasserstoffatom, eine niedere Alkylgruppe, wie bevorzugt die Äthyl- oder insbesondere Methylgruppe, oder eine durch Hydroxy, Sulfo oder Sulfato niederes Alkoxy substituierte niedere Alkylgruppe, wie insbesondere die β-Hydroxyäthyl- oder β-Sulfoäthyl-Gruppe. Weiterhin bedeutet in Formel (16) der Formelrest

$R^3$ bevorzugt ein Wasserstoffatom, eine niedere Alkylgruppe, wie insbesondere die Methyl-, Äthyl- und Butylgruppe, eine durch Hydroxy, Sulfo, Sulfato oder niederes Alkoxy substituierte niedere Alkylgruppe, wie insbesondere die γ-Methoxypropyl-, β-Hydroxyäthyl und β-Sulfoäthyl-Gruppen, den Phenylrest, der durch Substituenten aus der Gruppe Sulfo, Methyl, Methoxy, Äthoxy, Acetylamino, Ureido, Carboxy, Carbamoyl, Chlor- Sulfomethyl und Sulfamoyl substituiert sein kann, oder den Naphthylrest, der durch 1, 2 oder 3 Sulfogruppen substituiert sein kann.

Von den erfindungsgemässen Verbindungen der allgemeinen Formel (1) sind weiterhin ebenfalls bevorzugt diejenigen entsprechend den allgemeinen Formeln (17) und (18)

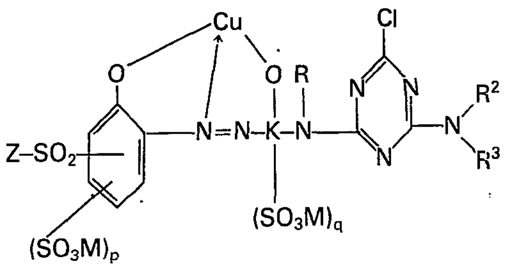
(17)

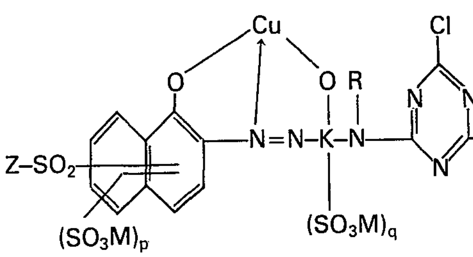
(18)

zu nennen, in welchen

R und Z die obengenannten Bedeutungen haben,

R bevorzugt für ein Wasserstoffatom oder die Methylgruppe steht und

Z bevorzugt die β-Sulfatoäthylgruppe ist,

K den Rest einer in ortho-Stellung zur phenolischen bzw. enolischen Hydroxygruppe kuppelnden Kupplungskomponente der Naphthalin- oder Pyrazolonreihe bedeutet, wobei

K bevorzugt die für Formel (16) angegebenen Bedeutungen besitzt,

p für die Zahl Null, 1 oder 2 und

q für die Zahl Null, bevorzugt 1 oder 2 steht, wobei die Summe von (p + q) gleich der Zahl 2, 3 oder 4 ist,

$R^2$ ein Wasserstoffatom oder die Methyl- oder Äthylgruppe bedeutet und

$R^3$ ein Wasserstoffatom, die β-Sulfoäthyl-Gruppe oder den Phenylrest bedeutet, der durch Substituenten der Gruppe Sulfo, Methyl, Methoxy, Acetylamino, Carboxy, Chlor und Sulfamoyl substituiert sein kann, oder den Naphthylrest bedeutet, der durch 1, 2 oder 3 Sulfogruppen substituiert sein kann, sowie

M für ein Wasserstoffatom oder für das Äquivalent eines ein-, zwei- oder dreiwertigen Metalls, insbesondere eines Alkali- oder Erdalkalimetalls, wie des Natriums, Kaliums oder Calciums, steht.

Von diesen erfindungsgemässen Verbindungen sind weiterhin die erfindungsgemässen Kupferkomplex-phenylazonaphthyl-, -naphthylazonaphthyl-, -phenylazopyrazolyl- und -naphthylazopyrazolyl-Verbindungen entsprechend den allgemeinen Formeln (19), (20) und (21)

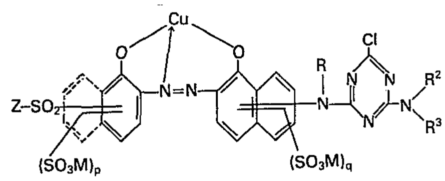
(19)

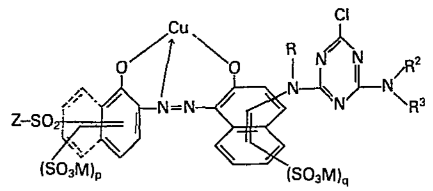
(20)

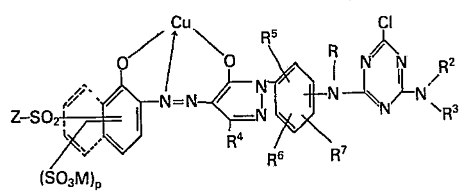
(21)

hervorzuheben, in welchen der gestrichelt eingezeichnete Rest eines Benzolkerns zusammen mit dem an ihm gebundenen Benzolkern den entsprechenden Naphthalinrest bedeutet und worin

M, R, $R^2$, $R^3$ und Z die obengenannten, insbesondere bevorzugten Bedeutungen besitzen sowie

p für die Zahl Null oder 1 und

q für die Zahl 1 oder 2 steht, wobei die Summe von (p + q) gleich 2 oder 3 ist, und worin

$R^4$ eine Methyl-, Carbonsäure-, niedere Carbalkoxy- oder Carbonsäureamid-Gruppe bedeutet,

$R^5$ ein Wasserstoffatom, die Sulfonsäuregruppe, eine Alkylgruppe von 1 bis 4 C-Atomen, bevorzugt die Äthylgruppe und insbesondere die Methylgruppe, oder ein Chloratom bedeutet,

$R^6$ ein Wasserstoffatom, eine Alkylgruppe von 1 bis 4 C-Atomen, wie die Äthylgruppe und insbesondere die Methylgruppe, oder ein Chloratom ist und

$R^7$ für ein Wasserstoffatom, eine Alkylgruppe von 1 bis 4 C-Atomen, wie die Äthylgruppe und insbesondere die Methylgruppe, oder die Sulfonsäuregruppe darstellt, wobei

$R^5$, $R^6$ und $R^7$ zueinander gleiche oder voneinander verschiedene Bedeutungen besitzen können.

Die erfindungsgemässen Verbindungen der allgemeinen Formel (1) lassen sich aus ihren Syntheselösungen nach allgemein bekannten Methoden isolieren, so beispielsweise durch Ausfällen aus dem Reaktionsmedium mittels Elektrolyten, beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann, wie beispielsweise ein Gemisch aus Mono- und Dinatriumphosphat.

Die neuen erfindungsgemässen Verbindungen der Formel (1) haben faserreaktive Eigenschaften und besitzen sehr gute Farbstoffeigenschaften. Sie können zum Färben von hydroxy- und/oder carbonamidgruppenhaltigem Material, insbesondere Fasermaterial, und von Leder verwendet werden. Ebenso können auch die bei der Synthese der erfindungsgemässen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen der Formel (1) zum Färben von hydroxy- und carbonamidgruppenhaltigen Materialien bzw. Verfahren zu deren Anwendung auf diesen Substraten. Eingeschlossen sind hierbei die Massefärbung, beispielsweise von Folien aus Polyamid, und die Druckfärbung. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien oder deren Regeneratprodukt und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskose-Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die neuen Kupferkomplex-Monoazoverbindungen der Formel (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach dem Ausziehverfahren unter Verwendung von verschiedensten säurebindenden Mitteln und gegebenenfalls unter Zugabe von neutralen Salzen, wie Natriumchlorid oder Natriumsulfat, sehr gute Farbausbeuten sowie einen ausgezeichneten Farbaufbau. Man färbt bei Temperaturen zwischen 40 und 105°C, gegebenenfalls bei Temperaturen bis zu 120°C unter Druck, gegebenenfalls in Gegenwart von üblichen Färbereihilfsmitteln, im wässrigen Bad. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschliessendes Dämpfen bei 100 bis 103°C, oder zweiphasig, beispielsweise durch Bedrucken mit einer neutralen oder schwach sauren Druckpaste und anschliessend entweder durch Hindurchführen durch ein heisses elektrolythaltiges alkalisches Bad oder durch Überklotzen mit einer alkalischen elektrolythaltigen Klotzflotte und anschliessendem Verweilen dieses behandelten Materials oder anschliessendem Dämpfen oder anschliessender Behandlung mit Trockenhitze, durchgeführt werden können, erhält man farbstarke Drucke mit gutem Stand der Konturen und einem klaren Weissfond. Der Ausfall der Drucke ist von wechselnden Fixierbedingungen nur wenig abhängig.

Bei der Fixierung mittels Trockenhitze nach den üblichen Thermofixierverfahren verwendet man Heissluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Anwesenheit von zwei Reaktivzentren in den als faserreaktive Farbstoffe verwendbaren Kupferkomplex-Monoazoverbindungen der allgemeinen Formel (1) erhält man ungewöhnlich hohe Fixierquoten auf Cellulosefasern. Reaktivfarbstoffe mit sehr hoher Fixierquote sind für die Praxis aus wirtschaftlichen, energetischen und ökologischen Gründen von grossem Nutzen, da die bessere Ausnutzung des angebotenen Farbstoffes gleichbedeutend ist mit einer energiesparenden, leichteren Auswaschbarkeit des verringerten, nicht fixierten Farbstoffanteiles und geringerer Abwasserbelastung.

Die mit den Kupferkomplex-Monoazoverbindungen der allgemeinen Formel (1) hergestellten Färbungen und Drucke zeichnen sich durch klare Nuancen aus. Insbesondere die Färbungen und Drucke auf Cellulosefasermaterialien besitzen eine hohe Farbstärke, wie bereits erwähnt, darüber hinaus eine gute bis sehr gute Lichtechtheit und sehr gute Nassechtheitseigenschaften, wie Wasch-, Walk-, Wasser-, Seewasser- und Schweissechtheiten, desweiteren eine gute Plissierechtheit, Bügelechtheit und Reibechtheit.

Die nachstehenden Beispiele dienen zur Erläuterung der Erfindung. Die Teile sind Gewichtsteile und die Prozentangaben beziehen sich auf Gewichtsprozente, sofern nichts anderes vermerkt. Gewichtsteile verhalten sich zu Volumenteilen wie Kilogramm zu Liter.

Beispiel 1

Eine Lösung von 64,5 Teilen der Verbindung der Formel

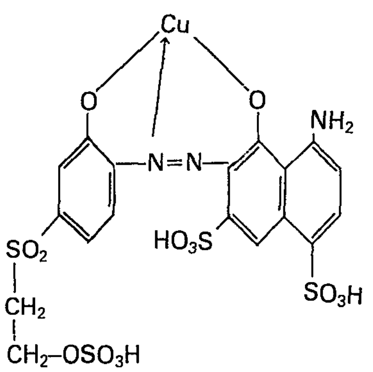

in Form des Natriumsalzes in 450 Teilen Wasser werden unter gutem Rühren in ein Gemisch aus 50 Teilen Eis, 10 Teilen Wasser und 19,4 Teilen 2,4,6-Trichlor-s-triazin einlaufen gelassen, wobei mittels Natriumcarbonat ein pH-Wert zwischen 6,0 und 6,8 aufrechterhalten wird. Das Gemisch wird sodann noch 30 Minuten bei einer Temperatur unterhalb von 20°C weitergerührt und anschliessend mit 17,3 Teilen Anilin-3-sulfonsäure versetzt. Mit Natriumcarbonat wird der pH-Wert der zweiten Kondensationsreaktion ebenfalls zwischen 6,0 und 6,8 gehalten. Danach wird die tiefviolette Lösung mit einer wässrigen Dinatriumphosphatlösung vermischt und sprühgetrocknet.

Man erhält ein dunkles elektrolythaltiges Pulver, das das Natriumsalz der Verbindung der Formel (A) enthält

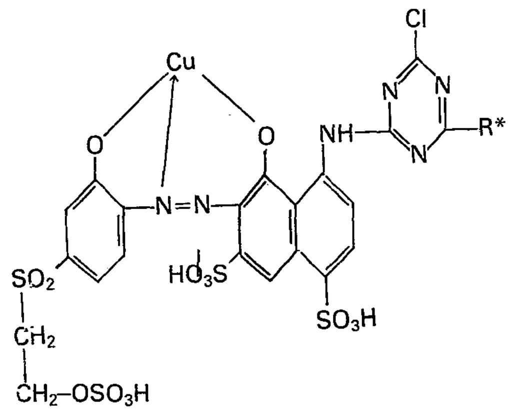

(A)

in welcher R* den m-Sulfo-phenylamino-Rest bedeutet. Diese Verbindung zeigt sehr gute Farbstoffeigenschaften und färbt nach den in der Technik üblichen und bekannten Applikations- und Fixiermethoden für saure, wasserlösliche Farbstoffe, insbesondere für faserreaktive Farbstoffe, die in der Beschreibung genannten Fasermaterialien, insbesondere Cellulosefasermaterialien, wie Baumwolle, in intensiven violetten Tönen mit guten bis sehr guten Echtheiten, von denen insbesondere die sehr gute Lichtechtheit und die sehr guten Waschechtheiten hervorzuheben sind. Der Farbstoff zeigt weiterhin auf Cellulosefasermaterialien nach den in der Technik üblichen Applikations- und Fixiermethoden für faserreaktive Farbstoffe ungewöhnlich hohe Fixierquoten; nicht fixierte Anteile des Farbstoffes lassen sich leicht auswaschen.

Beispiele 2 bis 17

In den nachfolgenden Tabellenbeispielen sind weitere erfindungsgemässe Kupferkomplex-Monoazoverbindungen mit Hilfe des Formelrestes R* der im Beispiel 1 aufgeführten allgemeinen Formel (A) beschrieben. Zu deren Herstellung kann man in der im Beispiel 1 angegebenen Weise verfahren, indem man jedoch in der zweiten Kondensationsstufe die Anilin-3-sulfonsäure durch die äquivalente Menge eines anderen, in dem entsprechenden Tabellenbeispiel beschriebenen, der allgemeinen Formel (8) entsprechenden aromatischen Amins ersetzt. Man erhält dementsprechend diese erfindungsgemässen Verbindungen in Form ihrer Natriumsalze. Diese erfindungsgemässen Kupferkomplex-Monoazoverbindungen zeigen ebenfalls sehr gute faserreaktive Farbstoffeigenschaften und liefern auf den in der Beschreibung erwähnten Fasermaterialien, insbesondere auf Cellulosefasermaterialien, nach den in der Technik üblichen Applikations- und Fixiermethoden farbstarke, allesamt violette Färbungen und Drucke mit guten Echtheiten, die denjenigen vergleichbar sind, die mit der im Beispiel 1 beschriebenen erfindungsgemässen Kupferkomplex-Monoazoverbindung erhältlich sind.

| Beispiel | Amin der Formel (8) | Verbindung der Formel (A), worin R* ist |
|---|---|---|
| 2 | N-Methyl-anilin | 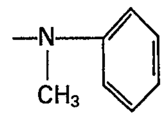 |
| 3 | 3,5-Dimethyl-anilin | 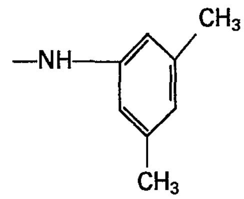 |
| 4 | 4-Methoxy-anilin | 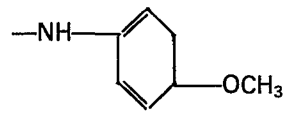 |
| 5 | Anilin-4-sulfonsäure | 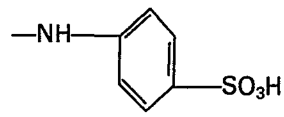 |
| 6 | 4-Amino-benzoesäure | 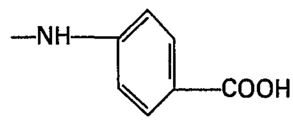 |
| 7 | 3-Methyl-anilin | 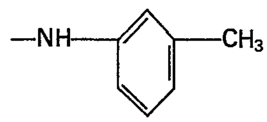 |
| 8 | 2-Methoxy-5-methyl-anilin | 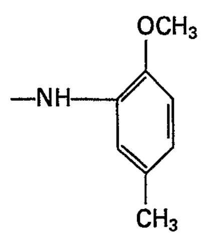 |
| 9 | ω-Aminobenzyl-4-sulfonsäure | 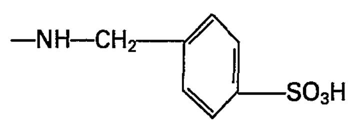 |
| 10 | Anilin | 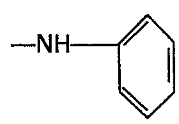 |
| 11 | 3-Acetylamino-anilin | 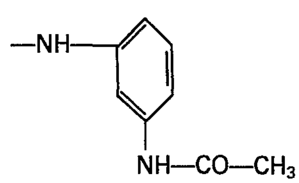 |
| 12 | N-(4-Aminophenyl)-harnstoff | 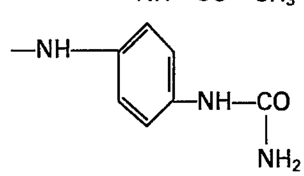 |

| Beispiel | Amin der Formel (8) | Verbindung der Formel (A), worin R* ist: |
|---|---|---|
| 13 | 3-(β-Sulfatoäthylsulfonyl)-anilin | 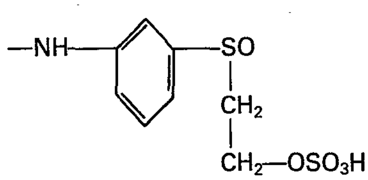 |
| 14 | 3-Vinylsulfonyl-anilin | 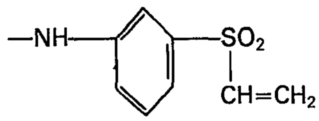 |
| 15 | 4-(β-Sulfatoäthylsulfonyl)-anilin | 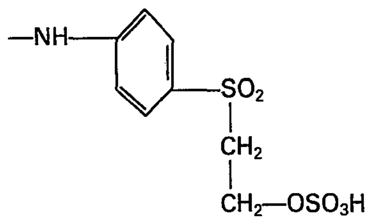 |
| 16 | 2-Amino-naphthalin-6-sulfonsäure | 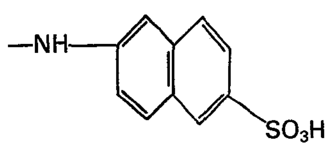 |
| 17 | 2-Amino-naphthalin-4,8-disulfonsäure | 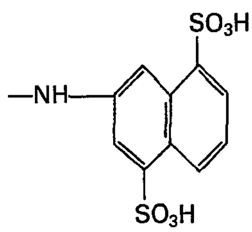 |

Beispiel 18

Die zu Anfang des Beispieles 1 beschriebene wässrige Lösung des Natriumsalzes von 64,5 Teilen der Kupferkomplex-Monoazoverbindung in 450 Teilen Wasser wird in eine Suspension von 24,2 Teilen 2,6-Dichlor-4-phenoxy-s-triazin in 60 Teilen Wasser einlaufen gelassen. Die Mischung wird noch 2 Stunden bei 30°C weitergerührt; mit Natriumcarbonat wird ein pH-Wert zwischen 6,5 und 7,0 eingehalten.

Die so hergestellte erfindungsgemässe Kupferkomplex-Monoazoverbindung wird mittels Kaliumchlorid ausgesalzen und abfiltriert; der feuchte Filterkuchen wird mit einer wässrigen Dinatriumphosphatlösung vermischt und getrocknet. Man erhält nach dem Mahlen ein elektrolythaltiges Farbstoffpulver, das das Alkalimetallsalz, vorwiegend Kaliumsalz, der Verbindung der Formel

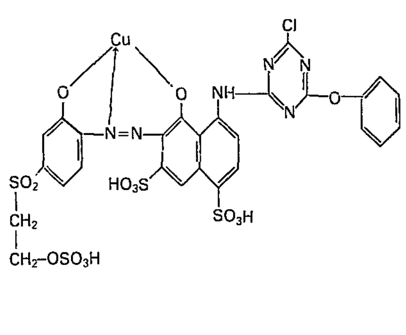

enthält. Diese Verbindung zeigt sehr gute faserreaktive Farbstoffeigenschaften und liefert beispielsweise nach den in der Drucktechnik üblichen Applikations- und Fixiermethoden auf den in der Beschreibung genannten Fasermaterialien, insbesondere auf Cellulosefasermaterialien in Gegenwart von Alkalien, wie beispielsweise Natriumbicarbonat, kräftige violette Drucke mit sehr guten Echtheiten, wie insbesondere guten bis sehr guten Lichtechtheiten, Waschechtheiten und Chlorbadwasserechtheiten.

Beispiele 19 bis 29

Zur Herstellung einer erfindungsgemässen Kupferkomplex-Monoazoverbindung entsprechend der allgemeinen Formel (1) verfährt man in der im Beispiel 18 angegebenen Verfahrensweise, setzt jedoch anstelle der dort angegebenen Dichlorphenoxytriazin-Verbindung die äquivalente Menge an einer der in den nachfolgenden Tabellenbeispielen 19 bis 29 aufgeführten Dichlortriazin-Verbindungen ein. Man erhält auf diese Weise eine erfindungsgemässe Kupferkomplexverbindung entsprechend der obigen allgemeinen Formel (A), in welcher der Formelrest R* den in dem jeweiligen Tabellenbeispiel formelmässig angegebenen Rest darstellt. Diese erfindungsgemässen Verbindungen der Beispiele 19 bis 29, die als Alkalimetallsalze aus dem Reaktionsansatz isoliert werden, zeigen ebenfalls sehr gute faserreaktive Farbstoffeigenschaften und liefern insbesondere auf Cellulosefasermaterialien, wie Baumwolle, nach den in der Technik üblichen Applikations- und Fixiermethoden kräftige, violette Färbungen mit guten Echtheiten, die denen der erfindungsgemässen Verbindung des Beispieles 18 ähnlich sind.

| Beispiel | Dichlortriazinylverbindung entsprechend der allgemeinen Formel (6) | Verbindung der Formel (A), worin R* ist: |
|---|---|---|
| 19 | 2,6-Dichlor-4-methoxy-s-triazin | $—OCH_3$ |
| 20 | 2,6-Dichlor-4-(methoxyäthoxy)-s-triazin | $—O—CH_2—CH_2—OCH_3$ |
| 21 | 2,6-Dichlor-4-äthylmercapto-s-triazin | $—S—CH_2—CH_3$ |
| 22 | 2,6-Dichlor-4-phenylmercapto-s-triazin | 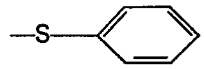 |
| 23 | 2,6-Dichlor-4-amino-s-triazin | $—NH_2$ |
| 24 | 2,6-Dichlor-4-äthylamino-s-triazin | $—NH—C_2H_5$ |
| 25 | 2,6-Dichlor-4-(methoxyäthyl)-amino-s-triazin | $—NH—CH_2—CH_2—OCH_3$ |
| 26 | 2,6-Dichlor-4-cyclohexylamino-s-triazin | 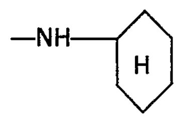 |
| 27 | 2,6-Dichlor-4-(β-sulfoäthyl)-amino-s-triazin | $—NH—CH_2—CH_2—SO_3H$ |
| 28 | 2,6-Dichlor-4-(N-methyl-N-β-sulfoäthyl)-amino-s-triazin | 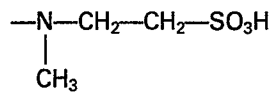 |
| 29 | 2,6-Dichlor-4-morpholino-s-triazin | 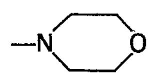 |

Beispiel 30

Eine wässrige Lösung mit einem pH-Wert von 7 des Natriumsalzes von 83,2 Teilen der Verbindung der Formel

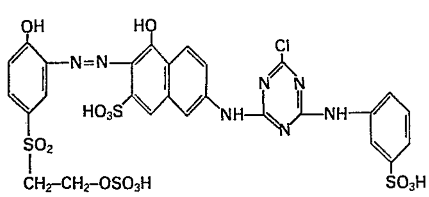

(die durch Kupplung von diazotiertem 3-Amino-4-hydroxyphenyl-β-sulfatoäthylsulfon mit dem sekundären Kondensationsprodukt aus 2,4,6-Trichlortriazin, Anilin-3-sulfonsäure und 2-Amino-5-hydroxy-naphthalin-7-sulfonsäure hergestellt werden kann) in 495 Teilen Wasser wird bei einer Temperatur von 35°C unter gutem Rühren mit 25 Teilen Kupfersulfat versetzt; der Reaktionsansatz wird zwei Stunden lang bei einem pH-Wert von 4,5 bis 5,0 gerührt. Die erhaltene erfindungsgemässe Kupferkomplex-Monoazoverbindung wird aus dem Reaktionsansatz mittels Kaliumchlorid ausgesalzen, abfiltriert und bei 60°C getrocknet. Das nach Mahlen erhaltene elektrolythaltige Pulver enthält das Alkalimetallsalz, vorwiegend Kaliumsalz, der Verbindung der Formel

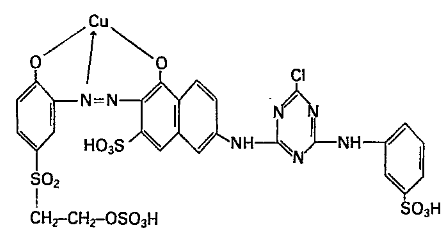

Diese erfindungsgemässe Verbindung zeigt sehr gute faserreaktive Farbstoffeigenschaften und liefert beispielsweise auf Cellulosefasermaterialien nach den in der Technik üblichen Applikations- und Fixiermethoden für faserreaktive Farbstoffe in Gegenwart eines säurebindenden Mittels kräftige, rubinrote Färbungen und Drucke, die sehr gute Wasch- und Lichtechtheiten aufweisen.

Beispiel 31

Eine Lösung des Natriumsalzes von 71,9 Teilen der Kupferkomplex-Monoazoverbindung der Formel

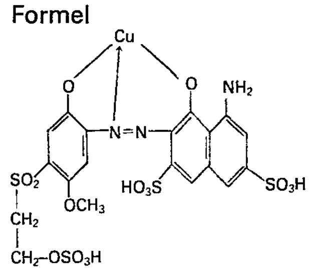

(die durch Kupplung von 4-Amino-2,5-dimethoxy-phenyl-β-sulfatoäthylsulfon mit 1-Acetylamino-8-hydroxy-naphthalin-3,6-disulfonsäure, entalkylierende Kupferung, Verseifung der Acetylaminogruppe zur Aminogruppe und anschliessende Veresterung der dabei gebildeten β-Hydroxyäthylsulfon-Gruppe hergestellt werden kann, in 635 Teile Wasser lässt man unter gutem Rühren in ein Gemisch aus 50 Teilen Wasser, 10 Teilen Eispulver und 19,4 Teilen 2,4,6-Trichlor-s-triazin einlaufen, wobei mit Natriumcarbonat ein pH-Wert zwischen 6,0 und 6,8 eingehalten wird. Nach weiterem Rühren für 30 Minuten bei einer Temperatur unterhalb von 20°C gibt man 17,3 Teile Anilin-3-sulfonsäure hinzu, wobei bei dieser zweiten Kondensationsreaktion ebenfalls ein pH-Wert zwischen 6,0 und 6,8 mittels Natriumbicarbonat eingehalten wird. Nach Beendigung der Reaktion wird der Ansatz der Sprühtrocknung unterworfen.

Es wird ein elektrolythaltiges, schwarzblaues Pulver erhalten, das sich in Wasser mit blauer Farbe leicht löst. Es enthält das Natriumsalz der Verbindung der Formel

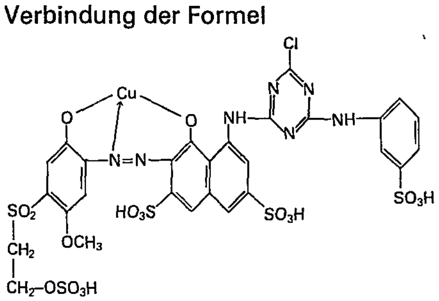

die sehr gute faserreaktive Farbstoffeigenschaften besitzt und beispielsweise Baumwolle im Ausziehverfahren in kräftigen, blauen Tönen mit sehr guten Licht- und Waschechtheiten färbt.

Beispiel 32

75,9 Teile 1-(β-Sulfatoäthylsulfonyl)-7-amino-naphthalin-3-sulfonsäure werden in 400 Teilen Wasser und 200 Teilen Eis eingerührt und bei 5 bis 10°C mit einer wässrigen Natriumnitritlösung diazotiert. Die erhaltene Diazosuspension wird in eine Lösung von 118 Teilen des sekundären Kondensationsproduktes aus 1-Amino-8-hydroxy-naphthalin-3,6-disulfonsäure, 2,4,6-Trichlor-s-triazin und Anilin-3-sulfonsäure in 800 Teilen Wasser einfliessen gelassen, wobei der pH-Wert zwischen 5,5 und 6,5 mittels Natriumcarbonat eingehalten wird. Nach Beendigung der Kupplungsreaktion werden 50 Teile kristallines Kupfersulfat und anschliessend im Verlaufe von etwa 4 Stunden bei einer Temperatur von 20 bis 25°C und einem pH-Wert von 4,5 bis 5,0 500 Volumenteile einer 14%igen wässrigen Wasserstoffperoxid-Lösung zugegeben. Nach Beendigung der oxidativen Kupferungsreaktion wird die gebildete erfindungsgemässe Verbindung mittels Kaliumchlorid ausgesalzen, abfiltriert, der Rückstand mit einer wässrigen Kaliumchloridlösung gewaschen und sodann unter reduziertem Druck bei 60°C getrocknet. Man erhält ein schwarzblaues, elektrolythaltiges Pulver, das das Alkalimetallsalz, vorwiegend Kaliumsalz der Verbindung der Formel

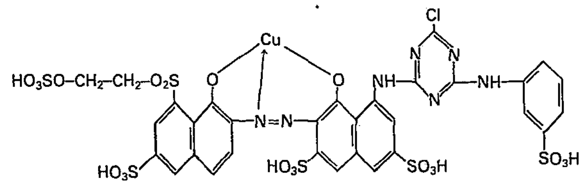

enthält. Diese erfindungsgemässe Verbindung zeigt sehr gute faserreaktive Farbstoffeigenschaften und liefert beispielsweise auf Zellwolle nach einem in der Technik üblichen Klotz-Kurz-Verweil-Verfahren tiefblaue Färbungen mit sehr guten Wasch- und Lichtechtheiten.

Beispiele 33 bis 54

In den nachfolgenden Tabellenbeispielen sind weitere erfindungsgemässe Kupferkomplex-Monoazoverbindungen entsprechend der allgemeinen Formel (1) beschrieben, die sehr gute faserreaktive Farbstoffeigenschaften besitzen und ebenfalls auf den in der Beschreibung genannten Fasermaterialien, wie insbesondere Cellulosefasermaterialien, vorzugsweise Baumwolle, nach den in der Technik üblichen Applikations- und Fixiermethoden licht- und nassechte Färbungen und Drucke in den in dem jeweiligen Tabellenbeispiel angegebenen Farbtönen liefern. Diese erfindungsgemässen Kupferkomplex-Azoverbindungen sind in den Tabellenbeispielen durch ihre Komponenten (Diazokomponenten, Kupplungskomponenten und in 4-Stellung des Triazinrestes befindlichen Aminosubstituenten) charakterisiert. Sie können unter Verwendung der entsprechenden, aus den Tabellenbeispielen ersichtlichen Komponenten oder deren Vorprodukte in erfindungsgemässer Weise, beispielsweise in einer der in den obigen Ausführungsbeispielen angegebenen Verfahrensweise, hergestellt werden; der im Chlortriazin-Rest mit X angegebene Substituent entspricht dem Aminorest des Amins entsprechend der allgemeinen Formel (8).

| Beispiel | Diazokomponente | Kupplungskomponente | Rest X des Amins (8) in Diazo- oder Kupplungskomponenten | Farbton auf Baumwolle |
|---|---|---|---|---|
| 33 | 4-Amino-5-hydroxy-phenyl-vinylsulfon | 1-(6'-Chlor-4'-X-triazinylamino)-8-hydroxy-naphthalin-4,6-disulfonsäure | 4-Sulfoanilino | violett |
| 34 | 4-Amino-phenyl-β-acetoxy äthylsulfon | 1-(6'-Chlor-4'-X-triazinylamino)-8-hydroxy-naphthalin-4,6-disulfonsäure | 3-Carboxyanilino | violett |

| Beispiel | Diazokomponente | Kupplungskomponente | Rest X des Amins (8) in Diazo- oder Kupplungs-komponenten | Farbton auf Baumwolle |
|---|---|---|---|---|
| 35 | 4-Amino-5-hydroxy-phenyl-β-thiosulfatoäthylsulfon | 1-(6'-Chlor-4'-X-triazinylamino)-8-hydroxy-naphthalin-3,6-disulfonsäure | Amino | violett |
| 36 | 3-Amino-phenyl-β-chlor-äthylsulfon | 2-(6'-Chlor-4'-X-triazinylamino)-5-hydroxy-naphthalin-1,7-disulfonsäure | 3-Sulfoanilino | rubin |
| 37 | 3-Amino-4-hydroxy-phenyl-β-sulfatoäthylsulfon | 2-(6'-Chlor-4'-X-triazinylamino)-8-hydroxy-naphthalin-6-sulfonsäure | 3-Sulfoanilino | rubin |
| 38 | 3-Amino-4-hydroxy-phenyl-β-sulfatoäthylsulfon | 1-(6'-Chlor-4'-X-triazinylamino)-8-hydroxy-naphthalin-3,6-disulfonsäure | Phenoxy | violett |
| 39 | 3-Amino-4-hydroxy-phenyl-β-sulfatoäthylsulfon | 2-(6'-Chlor-4'-X-triazinylamino)-5-hydroxy-naphthalin-7-sulfonsäure | β-Sulfoäthyl-methylamino | rubin |
| 40 | 3-Amino-6-methoxy-phenyl-β-sulfatoäthylsulfon | 1-(6'-Chlor-4'-X-triazinylamino)-8-hydroxy-naphthalin-4,6-disulfonsäure | 3-Sulfoanilino | violett |
| 41 | 7-Amino-naphthyl-(1)-β-sulfatoäthylsulfon | 1-(6'-Chlor-4'-X-triazinylamino)-8-hydroxy-naphthalin-4,6-disulfonsäure | β-Sulfoäthylamino | blau |
| 42 | 7-Amino-3-sulfo-naphthyl-(1)-β-sulfatoäthylsulfon | 2-(6'-Chlor-4'-X-triazinylamino)-5-hydroxy-naphthalin-7-sulfonsäure | 3-Sulfoanilino | violett |
| 43 | 7-Amino-3-sulfo-naphthyl-(1)-β-sulfatoäthylsulfon | 1-(6'-Chlor-4'-X-triazinylamino)-8-hydroxy-naphthalin-3,6-disulfonsäure | 4-Aminophenyl-β-sulfatoäthylsulfon | blau |
| 44 | 3-Amino-4-hydroxy-phenyl-β-sulfatoäthylsulfon | 1-(6'-Chlor-4'-X-triazinylamino)-8-hydroxy-naphthalin-3,6-disulfonsäure | 4-Aminophenyl-β-sulfatoäthylsulfon | violett |
| 45 | 4-Amino-naphthyl-(1)-β-sulfatoäthylsulfon | 1-(6'-Chlor-4'-X-triazinylamino)-8-hydroxy-naphthalin-3,6-disulfonsäure | 3-Sulfoanilin | blau |
| 46 | 4-Amino-6-sulfo-naphthyl-(1)-β-sulfatoäthylsulfon | 1-(6'-Chlor-4'-X-triazinylamino)-8-hydroxy-naphthalin-4,6-disulfonsäure | β-Sulfoäthyl-amin | blau |
| 47 | 5-Amino-8-sulfo-naphthyl-(2)-β-sulfatoäthylsulfon | 1-(6'-Chlor-4'-X-triazinylamino)-8-hydroxy-naphthalin-3,6-disulfonsäure | N-Äthylanilino | blau |
| 48 | 2-Amino-6-(6'-chlor-4'-X-triazinylamino)-naphthalin-4,8-disulfonsäure | 4-Hydroxy-naphthyl-(1)-β-sulfato-äthylsulfon | 1-Naphthylamino-3,6-disulfonsäure | violett |
| 49 | 2-Amino-6-(6'-chlor-4'-X-triazinylamino)-naphthalin-4,8-disulfonsäure β-sulfatoäthylsulfon | 6-Hydroxy-naphthyl-(1)-β-sulfato-äthylsulfon | 3-Sulfoanilino | violett |
| 50 | 4-(6'-Chlor-4'-X-triazinyl-amino)-2-amino-phenol-6-sulfonsäure | 2-N-Methyl-N-äthionylamino-8-hydroxy-naphthalin-6-sulfonsäure | 3-Sulfoanilino | violett |
| 51 | 6-(6'-Chlor-4'-X-triazinyl-amino)-2-amino-phenol-4-sulfonsäure | 1-(4'-β-Sulfatoäthylsulfonyl-phenyl)-3-carboxy-pyrazolon-5 | 3-Sulfoanilino | rotbraun |

| Beispiel | Diazokomponente | Kupplungskomponente | Rest X des Amins (8) in Diazo- oder Kupplungskomponenten | Farbton auf Baumwolle |
|---|---|---|---|---|
| 52 | 6-(6'-chlor-4'-X-triazinyl-amino)-2-amino-phenol-4-sulfonsäure | 1-(4'-β-Sulfatoäthylsulfonyl-2'-sulfophenyl)-3-carbäthoxy-pyrazolon-5 | 4-Sulfoanilino | rotbraun |
| 53 | 3-Amino-4-hydroxy-phenyl-β-sulfatoäthylsulfon | 1-[2'-Sulfo-4'-(6"-chlor-4"-X-triazinylamino)-phenyl]-3-carboxy-pyrazolon-5 | 3-Sulfoanilino | gelbbraun |
| 54 | 3-Amino-4-hydroxy-phenyl-β-sulfatoäthylsulfon | 1-[2'-Methyl-3'-sulfo-5'-(6"-chlor-4"-X-triazinylamino)-phenyl]-3-carboxy-pyrazolon-5 | 3-Sulfoanilino | gelbbraun |
| 55 | 3-Amino-4-hydroxy-5-sulfo-phenyl-β-sulfatoäthylsulfon | 1-(6'-Chlor-4'-X-triazinylamino)-3-carbonamido-4-methyl-6-hydroxy-pyridon-2 | β-Sulfoäthyl-amin | gelbbraun |
| 56 | 3-Amino-4-hydroxy-5-sulfo-phenyl-β-sulfatoäthylsulfon | 1-(6'-Chlor-4'-X-triazinylamino)-7-hydroxy-naphthalin-3-sulfonsäure | 3-Sulfoanilin | violett |

**Patentansprüche**

Wasserlösliche Kupferkomplex-Monoazoverbindungen der allgemeinen Formel (1)

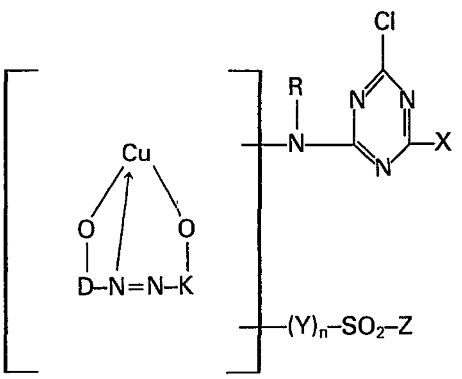

(1)

in welcher

D den Rest einer Diazokomponente der Benzol- oder Naphthalinreihe bedeutet, deren metallkomplexbindende Hydroxygruppe bzw. Oxygruppe in ortho-Stellung zur Azobrücke steht,

K den Rest einer Kupplungskomponente der Benzol-, Naphthalin-, Pyridon- oder Pyrazolon-Reihe mit einer phenolischen oder enolischen, das Kupfer komplex bindenden Hydroxygruppe bzw. Oxygruppe darstellt, an welche die Azogruppe in ortho-Stellung bzw. benachbart zu dieser phenolischen oder enolischen Hydroxygruppe bzw. Oxygruppe gekuppelt ist,

R ein Wasserstoffatom oder eine Alkylgruppe von 1 bis 4 C-Atomen ist,

Y den Rest der Formel –NH–, –N(niederes Alkyl)- oder $-CH_2-$ bedeutet,

n für die Zahl Null oder 1 steht,

Z die Vinyl-, β-Acetoxyäthyl-, β-Thiosulfatoäthyl-, β-Chloräthyl oder β-Sulfatoäthyl-Gruppe bedeutet und

X ein Rest der allgemeinen Formel (2a), (2b) oder (2c)

$$—O–R^1, \quad (2a)$$

$$—S–R^1, \quad (2b)$$

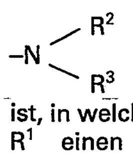

(2c)

ist, in welchen

$R^1$ einen gegebenenfalls substituierten, verzweigten oder unverzweigten Alkylrest, einen gegebenenfalls substituierten Arylrest oder einen gegebenenfalls substituierten heteroaromatischen Rest bedeutet,

$R^2$ ein Wasserstoffatom oder ein gegebenenfalls substituierter, verzweigter oder unverzweigter Alkylrest oder ein cycloaliphatischer Rest ist und

$R^3$ ein Wasserstoffatom oder ein gegebenenfalls substituierter, verzweigter oder unverzweigter Alkylrest oder ein gegebenenfalls substituierter Arylrest, bedeutet, wobei

$R^1$, $R^2$ und $R^3$ gleich oder verschieden voneinander sein können, oder worin

$R^2$ und $R^3$ zusammen mit dem Stickstoffatom einen gegebenenfalls ein weiteres Heteroatom enthaltenden heterocyclischen, gesättigten Ring bilden,

und wobei die Gruppen der Formeln (3) und (4)

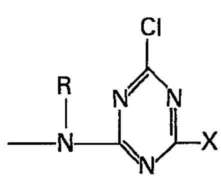

(3)

$$—(Y)_n–SO_2–Z \quad (4)$$

mit R, X, Y, Z und n der obengenannten Bedeutung an den Rest D und an den Rest K, entweder voneinander getrennt oder beide gleichzeitig an D oder K, gebunden sind.

2. Verbindungen nach Anspruch 1, dadurch gekennzeichnet, dass die an D gebundenen Substituenten der Gruppe Alkoxy von 1 bis 4 C-Atomen, Alkyl von 1 bis 4 C-Atomen, Halogen, Hydroxy, Carboxy, Nitro, durch Hydroxy, Sulfato, Sulfo, Carboxy oder niederes Alkoxy substituiertes niederes Alkyl, Acylamino einer aliphatischen Carbonsäure von 2 bis 6 C-Atomen, Acylamino von aromatischen Carbonsäuren, Sulfo, Sulfamoyl, Carbamoyl, am Stickstoffatom durch niederes Alkyl, gegebenenfalls substituiertes Benzyl und gegebenenfalls substituiertes Phenyl mono- oder disubstituiertes Sulfamoyl, am Stickstoffatom durch niederes Alkyl, gegebenenfalls substituiertes Benzyl und gegebenenfalls substituiertes Phenyl mono- oder disubstituiertes Carbamoyl und Cyano angehören und die an K gebundenen Substituenten der Gruppe Alkoxy von 1 bis 4 C-Atomen, Alkyl von 1 bis 4 C-Atomen, Halogen, Hydroxy, Carboxy, Nitro, durch Hydroxy, Sulfato, Sulfo, Carboxy oder niederes Alkoxy substituiertes niederes Alkyl, Acylamino einer aliphatischen Carbonsäure von 2 bis 6 C-Atomen, Acylamino von aromatischen Carbonsäuren, Sulfo, Sulfamoyl, Carbamoyl, am Stickstoffatom durch niederes Alkyl, gegebenenfalls substituiertes Benzyl und gegebenenfalls substituiertes Phenyl mono- oder disubstituiertes Sulfamoyl, am Stickstoffatom durch niederes Alkyl, gegebenenfalls substituiertes Benzyl und gegebenenfalls substituiertes Phenyl mono- oder disubstituiertes Carbamoyl, Cyano, Amino, niederes Alkylamino, Aminophenyl und niederes Aminoalkyl angehören.

3. Verbindungen nach Anspruch 1 oder 2 der allgemeinen Formel

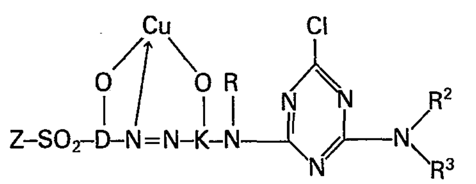

(16)

in welcher D, K, R, $R^2$, $R^3$ und Z die in Anspruch 1 oder 2 genannten Bedeutungen besitzen.

4. Verbindungen nach Anspruch 1 oder 3 der Formel (1) bzw. (16), in welcher

D den Benzolkern bedeutet, der durch einen oder zwei Substituenten substituiert sein kann, die der Gruppe niederes Alkyl, niederes Alkoxy, Carboxy, Acetylamino, Benzoylamino, Sulfobenzoylamino, Carbamoyl, durch niederes Alkyl, Benzyl und/oder Phenyl mono- oder disubstituiertes Carbamoyl, Sulfamoyl, durch niederes Alkyl, Benzyl und/oder Phenyl mono- oder disubstituiertes Sulfamoyl, Cyan, Nitro, Chlor, Brom und Sulfo angehören,

K den Naphthalinkern bedeutet, der durch 1 oder 2 Sulfonsäuregruppen substituiert sein kann, oder den Rest des Pyrazolo-4,5-ylens bedeutet, der in 3-Stellung durch Methyl, Carboxy, Carbamoyl, niederes Carbalkoxy, Phenyl oder Sulfophenyl substituiert ist und in 1-Stellung den Phenylkern oder Naphthylkern gebunden enthält, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein kann, oder

K als Rest einer Kupplungskomponente von Acetoacetylanilid- oder naphthylamid-Rest bedeutet, wobei der Phenylrest durch 1 oder 2 Substituenten substituiert sein kann, die der Gruppe niederes Alkyl, niederes Alkoxy, Carboxy, Acetylamino, Benzoylamino, Carbamoyl, durch niederes Alkyl, Benzyl und/oder Phenyl mono- oder disubstituiertes Carbamoyl, Sulfamoyl, durch niederes Alkyl, Benzyl und/oder Phenyl mono- oder disubstituiertes Sulfamoyl, Cyan, Nitro, Chlor, Brom, Trifluormethyl und Sulfo angehören, wobei in

K jeweils das komplexbildende Sauerstoffatom ortho-ständig zur Azogruppe und der Chlortriazinylaminorest an einem der aromatischen Kerne von K gebunden ist,

$R^2$ ein Wasserstoffatom, eine niedere Alkylgruppe oder eine durch Hydroxy, Sulfo oder Sulfato niederes Alkoxy substituierte niedere Alkylgruppe ist,

$R^3$ ein Wasserstoffatom, eine niedere Alkylgruppe, eine durch Hydroxy, Sulfo, Sulfato oder niederes Alkoxy substituierte niedere Alkylgruppe, oder den Phenylrest, der durch Substituenten aus der Gruppe Sulfo, Methyl, Methoxy, Äthoxy, Acetylamino, Ureido, Carboxy, Carbamoyl, Chlor, Sulfomethyl und Sulfamoyl substituiert sein kann, oder den Naphthylrest, der durch 1, 2 oder 3 Sulfogruppen substituiert sein kann, und

R und Z die in Anspruch 1 genannten Bedeutungen besitzen.

5. Verbindungen nach Anspruch 1 der allgemeinen Formel

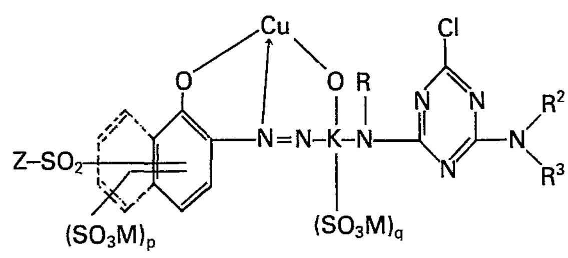

in welcher

R und Z die in Anspruch 1 genannten Bedeutungen besitzen und

K den Rest einer in ortho-Stellung zur phenolischen bzw. enolischen Hydroxygruppe kuppelnden Kupplungskomponente der Naphthalin- oder Pyrazolonreihe bedeutet,

p für die Zahl Null, 1 oder 2 und

q für die Zahl Null, 1 oder 2 steht, wobei die Summe von (p + q) gleich der Zahl 2, 3 oder 4 ist,

$R^2$ ein Wasserstoffatom oder die Methyl- oder Äthylgruppe bedeutet und

$R^3$ ein Wasserstoffatom, die Sulfoäthyl-Gruppe oder den Phenylrest bedeutet, der durch Substituenten der Gruppe Sulfo, Methyl, Methoxy, Acetylamino, Carboxy, Chlor und Sulfamoyl substituiert sein kann, oder den Naphthylrest bedeutet, der durch 1 oder 2 Sulfogruppen substituiert sein kann, und

M für ein Wasserstoffatom oder für das Äquivalent eines ein-, zwei- oder dreiwertigen Metalls steht sowie der gestrichelt eingezeichnete Rest eines Benzolkerns zusammen mit dem an ihn gebundenen Benzolkern den entsprechenden Naphthalinrest darstellt.

6. Kupferkomplex-phenylazonaphthyl-, -naphthylazonaphthyl-, -phenylazopyrazolyl- und -naphthylazopyrazolyl-Verbindungen nach Anspruch 1 der allgemeinen Formel

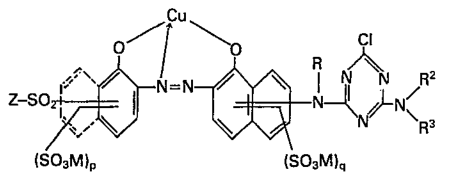

oder

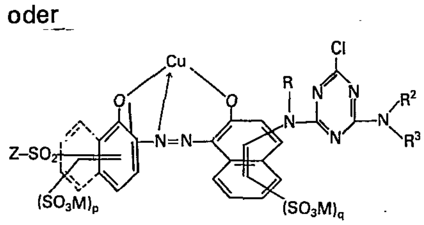

oder

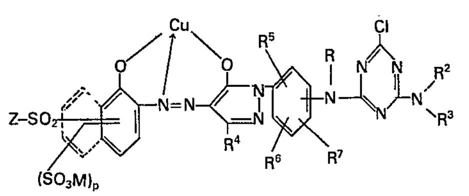

in welchen der gestrichelt eingezeichnete Rest eines Benzolkerns zusammen mit dem an ihm gebundenen Benzolkern den entsprechenden Naphthalinrest bedeutet und worin

R, $R^2$, $R^3$ und Z die in Anspruch 1, 4 oder 5 genannten Bedeutungen besitzen,

p für die Zahl Null oder 1 und

q für die Zahl 1 oder 2 steht, wobei die Summe von (p + q) gleich 2 oder 3 ist,

$R^4$ eine Methyl-, Carbonsäure-, niedere Carbalkoxy- oder Carbonsäureamid-Gruppe bedeutet,

$R^5$ ein Wasserstoffatom, die Sulfonsäuregruppe, eine Alkylgruppe von 1 bis 4 C-Atomen oder ein Chloratom bedeutet,

$R^6$ ein Wasserstoffatom, eine Alkylgruppe von 1 bis 4 C-Atomen oder ein Chloratom ist und

$R^7$ für ein Wasserstoffatom, eine Alkylgruppe von 1 bis 4 C-Atomen oder die Sulfonsäuregruppe darstellt, wobei

$R^4$, $R^5$, $R^6$ und $R^7$ zueinander gleiche oder voneinander verschiedene Bedeutungen besitzen können, und worin

M die in Anspruch 5 genannte Bedeutung hat.

7. Verbindungen nach Anspruch 1, 3 oder 4, dadurch gekennzeichnet, dass D hier einen Naphthalinkern bedeutet, der durch 1 oder 2 Sulfogruppen substituiert sein kann.

8. Verbindungen nach Anspruch 1, 3, 4 oder 7, dadurch gekennzeichnet, dass K hier den Rest des N-(Monosulfo- oder Disulfonaphthyl)-acetoacetylamids bedeutet.

9. Verbindungen nach Anspruch 1 der allgemeinen Formel

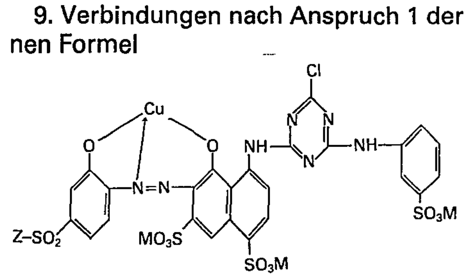

in welcher M und Z die in Anspruch 1 bzw. 5 genannten Bedeutungen haben.

10. Verbindungen nach Anspruch 1 der allgemeinen Formel

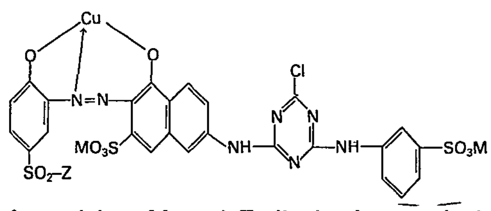

in welcher M und Z die in Anspruch 1 bzw. 5 genannten Bedeutungen haben.

11. Verbindungen nach Anspruch 1 der allgemeinen Formel

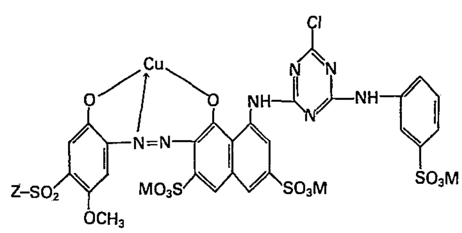

in welcher M und Z die in Anspruch 1 bzw. 5 genannten Bedeutungen haben.

12. Verbindungen nach Anspruch 1 der allgemeinen Formel

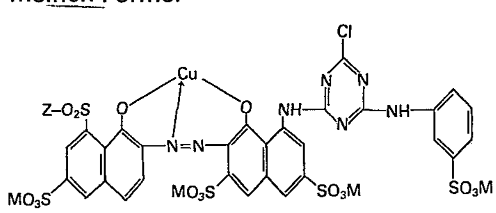

in welcher M und Z die in Anspruch 1 bzw. 5 genannten Bedeutungen haben.

13. Verbindungen nach Anspruch 1 der allgemeinen Formel

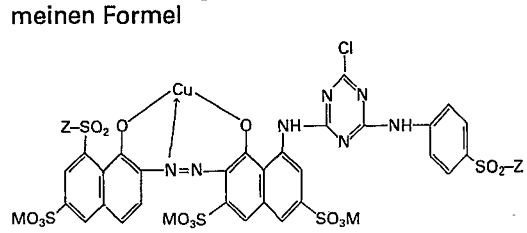

in welcher M und Z die in Anspruch 1 bzw. 5 genannten Bedeutungen haben.

14. Verbindungen nach einem der Ansprüche 1 bis 13, dadurch gekennzeichnet, dass Z für die β-Sulfatoäthyl- oder die Vinylgruppe steht.

15. Verbindungen nach einem der Ansprüche 5 bis 14, dadurch gekennzeichnet, dass M für Wasserstoff, Natrium oder Kalium steht.

16. Verfahren zur Herstellung der Verbindungen der allgemeinen Formel (1) von Anspruch 1, dadurch gekennzeichnet, dass man eine Kupferkomplex-Monoazoverbindung der allgemeinen Formel (5)

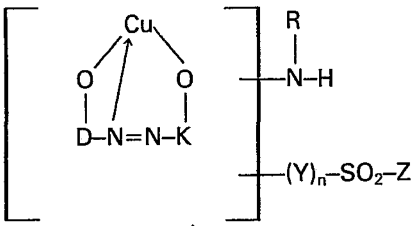

(5)

in welcher D, K, R, Y, Z und n die in Anspruch 1 genannten Bedeutungen haben, wobei die Gruppen der allgemeinen Formel (4)

$$-(Y)_n-SO_2-Z \quad (4)$$

und der allgemeinen Formel –NHR an D und K, getrennt oder gleichzeitig hieran, gebunden sind, in äquimolarer Menge mit einer 2,4-Dichlor-s-triazin-Verbindung der allgemeinen Formel (6)

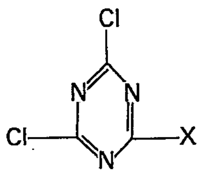

(6)

in welcher X die in Anspruch 1 genannte Bedeutung besitzt, umsetzt oder dass man eine Kupferkomplex-Monoazoverbindung der obigen Formel (5) in äquimolarer Menge mit 2,4,6-Trichlor-s-triazin umsetzt und die so hergestellte Dichlortriazinylamino-Verbindung der allgemeinen Formel (7)

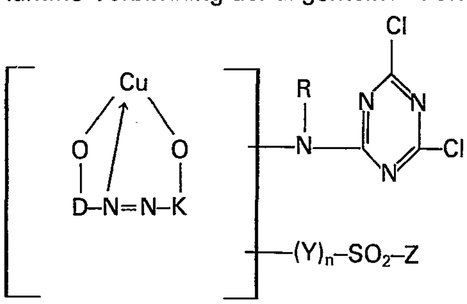

(7)

in welcher D, K, R, Y, Z und n die in Anspruch 1 genannten Bedeutungen haben, wobei die Reste entsprechend der oben angegebenen allgemeinen Formel (4) und der nachstehenden allgemeinen Formel (9)

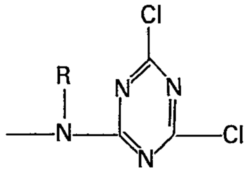

(9)

mit R der in Anspruch 1 genannten Bedeutung an D und K, getrennt voneinander oder gleichzeitig an D oder K, gebunden sind, in äquimolarer Menge mit einem Amin der allgemeinen Formel (8)

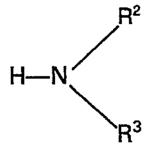

(8)

in welcher $R^2$ und $R^3$ die in Anspruch 1 genannten Bedeutungen haben, kondensiert oder dass man eine Verbindung der allgemeinen Formel

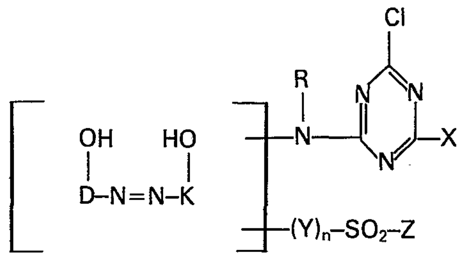

in welcher D, K, R, X, Y, Z und n die in Anspruch 1 genannten Bedeutungen besitzen, wobei die Reste entsprechend der allgemeinen Formel $-(Y)_n-SO_2-Z$ und der allgemeinen Formel (3) an D und K, getrennt voneinander oder gleichzeitig an D oder K, gebunden sind, mit einem kupferabgebenden Mittel in die Kupferkomplexverbindung überführt.

17. Verwendung der in Anspruch 1 genannten und definierten Verbindungen der allgemeinen Formel (1) als Farbstoffe.

**Claims**

1. Water-soluble copper complex monoazo compounds of the general formula (1)

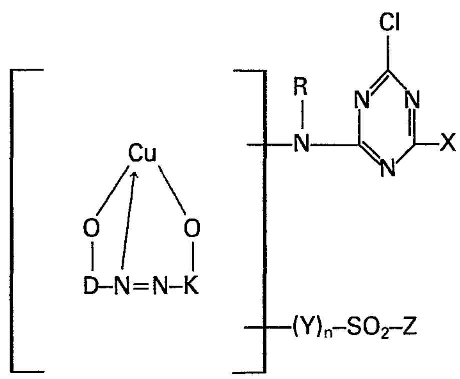

(1)

in which

D denotes the radical of a diazo component of the benzene or naphthalene series whose metal-complexing hydroxy group, respectively oxy group, is in the ortho-position relative to the azo bridge,

K is the radical of a coupling component of the benzene, naphthalene, pyridone or pyrazolone series, having a phenolic or enolic hydroxy group which complexes the copper, and to which coupling component the azo

group has been coupled in the ortho-position relative to, or adjacent to, this phenolic or enolic hydroxy group, respectively oxy group,

R is a hydrogen atom or an alkyl group of 1 to 4 C-atoms,

Y denotes the radical of the formula –NH–, –N(lower alkyl)- or $-CH_2-$,

n represents the number zero or 1,

Z denotes the vinyl, β-acetoxyethyl, β-thiosulfatoethyl, β-chloroethyl or β-sulfatoethyl group, and

X is a radical of the formula (2a), (2b) or (2c)

$$-O-R^1, \quad (2a)$$

$$-S-R^1, \quad (2b)$$

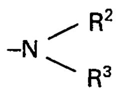
(2c)

in which

$R^1$ denotes an optionally substituted, branched or unbranched alkyl radical, an optionally substituted aryl radical or an optionally substituted heteroaromatic radical,

$R^2$ is a hydrogen atom or an optionally substituted, branched or unbranched alkyl radical or a cycloaliphatic radical and

$R^3$ denotes a hydrogen atom or an optionally substituted, branched or unbranched alkyl radical or an optionally substituted aryl radical,

$R^1$, $R^2$ and $R^3$ being identical or different, or in which

$R^2$ and $R^3$ together with the nitrogen atom, form a heterocyclic, saturated ring which may contain a further hetero atom,

and in which the groups of the formula (3) and (4)

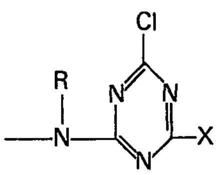
(3)

$$-(Y)_n-SO_2-Z \quad (4)$$

in which R, X, Y, Z and n have the abovementioned meaning, are bonded to the radical D and to the radical K, either separately from one another or simultaneously to D or K.

2. Coumpounds according to claim 1, characterized by that the substituents bonded to D belong to the group comprising alkoxy of 1 to 4 C-atoms, alkyl of 1 to 4 C-atoms, halogen, hydroxy, carboxy, nitro, lower alkyl which is substituted by hydroxy, sulfato, sulfo, carboxy or lower alkoxy, acylamino of an aliphatic carboxylic acid of 2 to 6 C-atoms, acylamino of aromatic carboxylic acids, sulfo, sulfamoyl, carbamoyl, sulfamoyl which is monosubstituted or disubstituted at the nitrogen atom by lower alkyl, optionally substituted benzyl and optionally substituted phenyl, carbamoyl which is monosubstituted or disubstituted at the nitrogen atom by lower alkyl, optionally substituted benzyl and optionally substituted phenyl, and cyano, and the substituents bonded to K belong to the group comprising alkoxy of 1 to 4 C-atoms, alkyl of 1 to 4 C-atoms, halogen, hydroxy, carboxy, nitro, lower alkyl which is substituted by hydroxy, sulfato, sulfo, carboxy or lower alkoxy, acylamino of an aliphatic carboxylic acid of 2 to 6 C-atoms, acylamino of aromatic carboxylic acids, sulfo, sulfamoyl, carbamoyl, sulfamoyl which is monosubstituted or disubstituted at the nitrogen atom by lower alkyl, optionally substituted benzyl and optionally substituted phenyl, carbamoyl which is monosubstituted or disubstituted at the nitrogen atom by lower alkyl, optionally substituted benzyl and optionally substituted phenyl, cyano, amino, lower alkylamino, aminophenyl and lower aminoalkyl.

3. Compounds according to claim 1 or 2, of the general formula

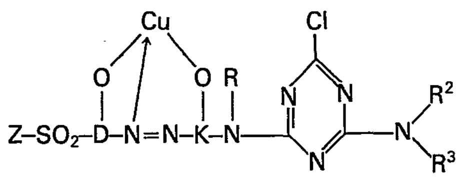
(16)

in which D, K, R, $R^2$, $R^3$ and Z have the meanings mentioned in claim 1 or 2.

4. Compounds according to claim 1 or 3, of the formula (1) or (16), respectively, in which

D denotes the benzene nucleus which can be substituted by one or two substituents which belong to the group comprising lower alkyl, lower alkoxy, carboxy, acetylamino, benzoylamino, sulfobenzoylamino, carbamoyl, carbamoyl which is monosubstituted or disubstituted by lower alkyl, benzyl and/or phenyl, sulfamoyl, sulfamoyl which is monosubstituted or disubstituted by lower alkyl, benzyl and/or phenyl, cyano, nitro, chlorine, bromine and sulfo,

K denotes the naphthalene nucleus which can be substituted by 1 or 2 sulfonic acid groups, or denotes the radical of pyrazol-4,5-ylene which is substituted in the 3-position by methyl, carboxy, carbamoyl, lower carbalkoxy, phenyl or sulfophenyl and contains, bonded in the 1-position, the phenyl nucleus or naphthyl nucleus, it being possible for the phenyl radical to be substituted by 1 or 2 sulfonic acid groups and/or one or two substituents from the group comprising lower alkyl, lower alkoxy, chlorine, bromine, nitro, acetylamino and carboxy, and for the naphthyl nucleus to be substituted by 1, 2 or 3 sulfo groups and/or one substituent from the group comprising lower alkyl, lower alkoxy, nitro, acetylamino and carboxy, or

K as radical of a coupling component, denotes the acetoacetylanilide or acetoacetylnaphthylamide radical, it being possible for the phenyl radical to be substituted by 1 or 2

substituents which belong to the group comprising lower alkyl, lower alkoxy, carboxy, acetylamino, benzoylamino, carbamoyl, carbamoyl which is monosubstituted or disubstituted by lower alkyl, benzyl and/or phenyl, sufamoyl, sulfamoyl which is monosubstituted or disubstituted by lower alkyl, benzyl and/or phenyl, cyano, nitro, chlorine, bromine, trifluormethyl and sulfo, and in all cases, the complex-forming oxygen atom of

K is bonded in the ortho-position relative to the azo group and the chlorotriazinylamino radical is bonded to one of the aromatic nuclei of K,

$R^2$ is a hydrogen atom, a lower alkyl group or a lower alkyl group which is substituted by hydroxy, sulfo or sulfato or lower alkoxy,

$R^3$ denotes a hydrogen atom, a lower alkyl group, a lower alkyl group which is substituted by hydroxy, sulfo, sulfato or lower alkoxy, or the phenyl radical which can be substituted by substituents from the group comprising sulfo, methyl, methoxy, ethoxy, acetylamino, ureido, carboxy, carbamoyl, chlorine, sulfomethyl and sulfamoyl, or the naphthyl radical which can be substituted by 1, 2 or 3 sulfo groups, and

R and Z have the meanings mentioned in claim 1.

5. Compounds according to claim 1 of the general formula

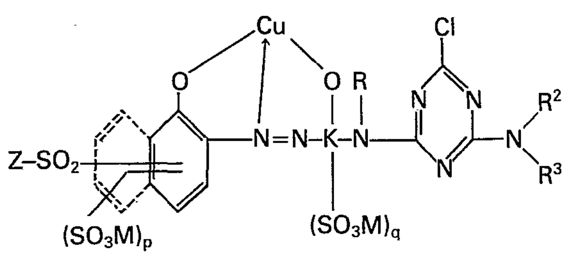

in which

R and Z have the meanings mentioned in claim 1 and

K denotes the radical of a coupling component of the naphthalene or pyrazolone series capable of coupling in ortho-position to the phenolic, respectively enolic hydroxy group,

p represents the number zero, 1 or 2 and

q represents the number zero, 1 or 2, the sum (p + q) being equal to the number 2, 3 or 4,

$R^2$ denotes a hydrogen atom or the methyl or ethyl group and

$R^3$ denotes a hydrogen atom, the sulfoethyl group or the phenyl radical which can be substituted by substituents of the group comprising sulfo, methyl, methoxy, acetylamino, carboxy, chlorine and sulfamoyl, or denotes the naphthyl radical which can be substituted by 1 or 2 sulfo groups, and

M represents a hydrogen atom or an equivalent of a monovalent, divalent or trivalent metal, and the radical of a benzene nucleus drawn with a broken line represents together with the benzene nucleus bonded to it the corresponding naphthalene radical.

6. Copper complex phenylazonaphthyl, naphthylazonaphthyl, phenylazopyrazolyl and naphthylazopyrazolyl compounds according to claim 1 of the general formula

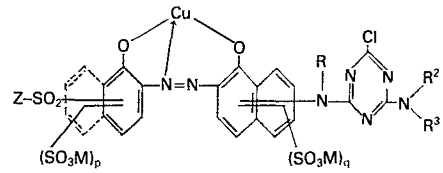

or

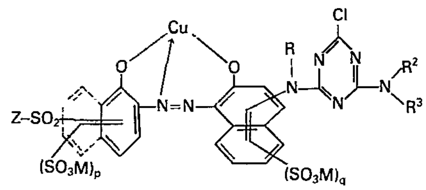

or

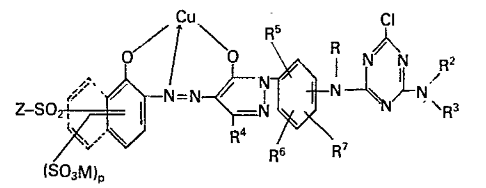

in which the radical of a benzene nucleus drawn with a broken line together with the benzene nucleus bonded to it denotes the corresponding naphthalene radical, and in which

R, $R^2$, $R^3$ and Z have the meanings mentioned in claim 1, 4 or 5,

p represents the number zero or 1 and

q represents the number 1 or 2, the sum (p + q) being equal to 2 or 3,

$R^4$ denotes a methyl, carboxylic acid, lower carbalkoxy or carboxamide group,

$R^5$ denotes a hydrogen atom, the sulfonic acid group, an alkyl group of 1 to 4 C-atoms or a chlorine atom,

$R^6$ is a hydrogen atom, an alkyl group of 1 to 4 C-atoms or a chlorine atom and

$R^7$ represents a hydrogen atom, an alkyl group of 1 to 4 C-atoms or the sulfonic acid group, and the members

$R^4$, $R^5$, $R^6$ and $R^7$ may have meanings which are identical to or different from one another, and

M has the meaning mentioned in claim 5.

7. Compounds according to claim 1, 3 or 4, characterized by that D denotes a naphthalene nucleus which can be substituted by 1 or 2 sulfo groups.

8. Compounds according to claim 1, 3, 4 or 7, characterized by that K denotes the radical of the N-(monosulfo- or disulfonaphthyl)-acetoacetylamide.

9. Compounds according to claim 1 of the general formula

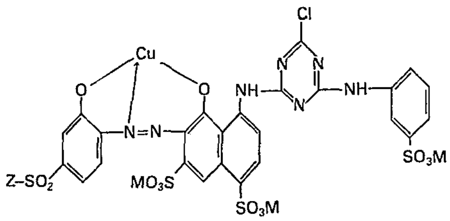

in which M and Z have the meanings mentioned in claim 1, respectively claim 5.

10. Compounds according to claim 1 of the general formula

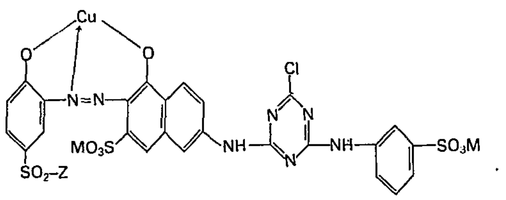

in which M and Z have the meanings mentioned in claim 1, respectively claim 5.

11. Compounds according to claim 1 of the general formula

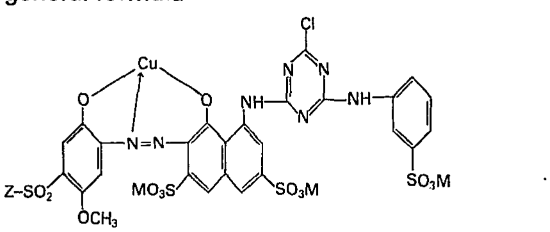

in which M and Z have the meanings mentioned in claim 1, respectively claim 5.

12. Compounds according to claim 1 of the general formula

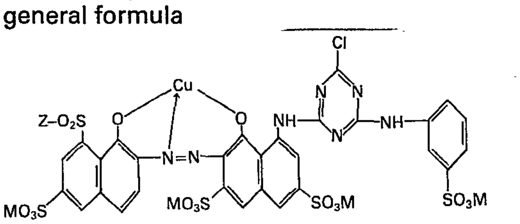

in which M and Z have the meanings mentioned in claim 1, respectively claim 5.

13. Compounds according to claim 1 of the general formula

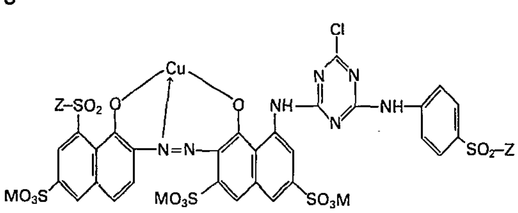

in which M and Z have the meanings mentioned in claim 1, respectively claim 5.

14. Compounds according to one of claims 1 to 13, characterized by that Z represents the β-sulfatoethyl or the vinyl group.

15. Compounds according to one of claims 5 to 14, characterized by that M represents hydrogen, sodium or potassium.

16. A process for the preparation of compounds of the general formula (1) of claim 1, characterized by that a copper complex monoazo compound of the general formula (5)

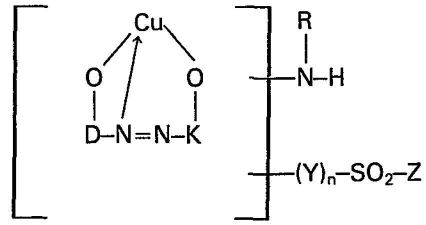

(5)

in which D, K, R, Y, Z and n have the meanings mentioned in claim 1 and in which the groups of the general formula (4)

$$-(Y)_n-SO_2-Z \quad (4)$$

and of the general formula –NHR are bonded separately or simultaneously to D and K, is reacted, in an equimolar amount, with a 2,4-dichloro-s-triazine compound of the general formula (6)

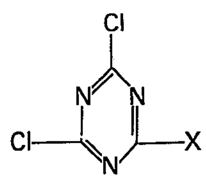

(6)

in which X has the meaning mentioned in claim 1, or that a copper complex monoazo compound of the above formula (5) is reacted, in an equimolar amount, with 2,4,6-trichloro-s-triazine, and the resulting dichlorotriazinylamino compound of the general formula (7)

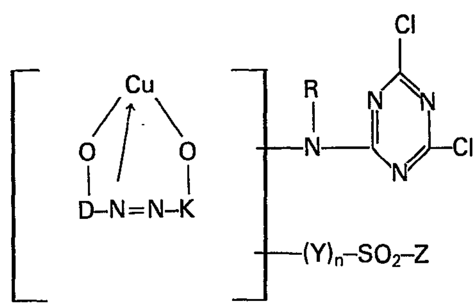

(7)

in which D, K, R, Y, Z and n have the meanings mentioned in claim 1 and in which the radicals corresponding to the abovementioned general formula (4) and to the following formula (9)

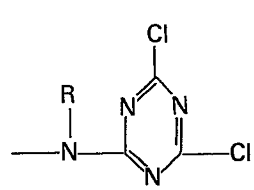

(9)

in which R has the meaning mentioned in claim 1, are bonded to D and K, separately from one another or simultaneously to D or K, is condensed, in an equimolar amount, with an amine of the general formula (8)

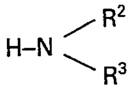

(8)

in which $R^2$ and $R^3$ have the meanings mentioned in claim 1, or that a compound of the general formula

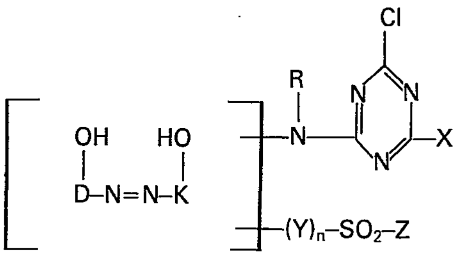

in which D, K, R, X, Y, Z and n have the meanings mentioned in claim 1 and in which the radicals corresponding to the formula $-(Y)_n-SO_2-Z$ and to the general formula (3) are bonded to D and K, separately from one another or simultaneously to D or K, is converted into the copper complex compound by means of a copper-donating agent.

17. The use of the compounds of the general formula (1), mentioned and defined in claim 1, as dyestuffs.

**Revendications**

1. Composés monoazoïques à complexe de cuivre solubles dans l'eau de formule générale (1)

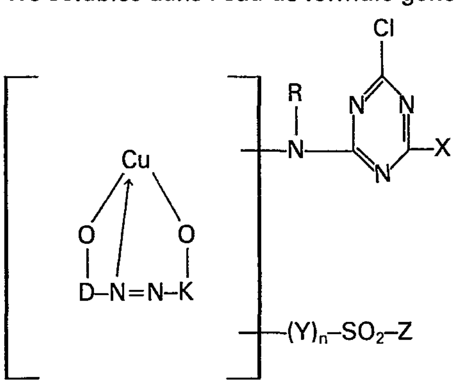

(1)

dans laquelle

D est le résidu d'un composant de diazotation de la série du benzène ou du naphtalène, dont le groupe hydroxy ou le groupe oxy fixant les complexes métallifères se trouve en position ortho par rapport au pont azo,

K est le résidu d'un composant de copulation de la série du benzène, du naphtalène, de la pyridone ou de la pyrazolone, avec un groupe hydroxy ou un groupe oxy, phénolique ou énolique, fixant le cuivre par complexation, sur lequel le groupe azo est copulé en position ortho ou en position voisine de ce groupe hydroxy ou de ce groupe oxy, phénolique ou énolique,

R est un atome d'hydrogène ou un groupe alkyle ayant de 1 à 4 atomes de carbone,

Y est le radical de formule –NH–, –N(alkyle inférieur)- ou $-CH_2-$,

n est le nombre zéro ou 1,

Z est le groupe vinyle, acétoxy-2 éthyle, thiosulfato-2 éthyle, chloro-2 éthyle ou sulfato-2 éthyle, et

X est un radical de formule générale (2a), (2b) ou (2c)

$-O-R^1,$ (2a)

$-S-R^1,$ (2b)

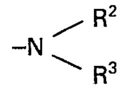

(2c)

dans lesquelles

$R^1$ est un radical alkyle à chaîne droite ou ramifiée, éventuellement substitué, un radical aryle éventuellement substitué ou un radical hétéroaromatique éventuellement substitué,

$R^2$ est un atome d'hydrogène ou un radical alkyle à chaîne droite ou ramifiée éventuellement substitué ou un radical cycloaliphatique, et

$R^3$ est un atome d'hydrogène ou un radical alkyle à chaîne droite ou ramifiée, éventuellement substitué, ou un radical aryle éventuellement substitué,

$R^1$, $R^2$ et $R^3$ pouvant être identiques ou différents les uns des autres, ou bien où

$R^2$ et $R^3$, avec l'atome d'azote, forment un cycle saturé, hétérocyclique, contenant éventuellement un autre hétéroatome,

et où les groupes de formules (3) et (4)

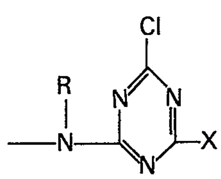

(3)

$-(Y)_n-SO_2-Z$ (4)

où R, X, Y, Z et n ont la signification donnée ci-dessus, sont liés au résidu D et au résidu K, ou bien séparément l'un de l'autre, ou bien les deux simultanément sur D ou K.

2. Composés selon la revendication 1, caractérisé en ce que les substituants liés à D appartiennent au groupe comprenant les substituants alcoxy ayant de 1 à 4 atomes de carbone, alkyle ayant de 1 à 4 atomes de carbone, halogène, hydroxy, carboxy, nitro, alkyle inférieur substitué par un groupe hydroxy, sulfato, sulfo, carboxy ou alcoxy inférieur; acylamino d'un acide carboxylique aliphatique ayant de 2 à 6 atomes de carbone, acylamino d'acides carboxyliques aromatiques, sulfo, sulfamoyle, sulfamoyle mono- ou disubstitué sur l'atome d'azote par un groupe alkyle inférieur, benzyle éventuellement substitué ou phényle éventuellement substitué; carbamoyle mono- ou disubstitué sur l'atome d'azote par un groupe alkyle inférieur, benzyle éventuellement substitué ou phényle éventuellement substitué; et

cyano; et les substituants liés à K appartiennent au groupe comprenant les substituants alcoxy ayant de 1 à 4 atomes de carbone, alkyle ayant de 1 à 4 atomes de carbone, halogène, hydroxy, carboxy, nitro, alkyle inférieur substitué par un groupe hydroxy, sulfato, sulfo, carboxy ou alcoxy inférieur; acylamino d'un acide carboxylique aliphatique ayant de 2 à 6 atomes de carbone, acylamino d'acides carboxyliques aromatiques, sulfo, sulfamoyle, carbamoyle, sulfamoyle mono- ou disubstitué sur l'atome d'azote par un groupe alkyle inférieur, benzyle éventuellement substitué ou phényle éventuellement substitué; carbamoyle mono- ou disubstitué sur l'atome d'azote par un groupe alkyle inférieur, benzyle éventuellement substitué ou phényle éventuellement substitué; cyano, amino, (alkyl inférieur)-amino, aminophényle et aminoalkyle inférieur.

3. Composés selon la revendication 1 ou 2, de formule générale

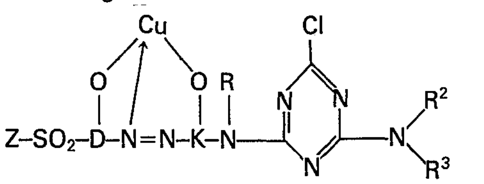

(16)

dans laquelle D, K, R, $R^2$, $R^3$ et Z ont la signification donnée dans la revendication 1 ou dans la revendication 2.

4. Composés selon la revendication 1 ou 3, de formule (1) ou (16) dans laquelle

D est le noyau benzène, qui peut être substitué par un ou deux substituants , qui appartiennent au groupe des substituants alkyle inférieur, alcoxy inférieur, carboxy, acétylamino, benzoylamino, sulfobenzoylamino, carbamoyle, carbamoyle mono- ou disubstitué par un groupe alkyle inférieur, benzyle et/ou phényle; sulfamoyle, sulfamoyle mono- ou disubstitué par un groupe alkyle inférieur, benzyle et/ou phényle; cyano, nitro, chloro, bromo et sulfo;

K est le noyau naphtalène, qui peut être substitué par un ou deux groupes sulfo, ou le résidu du pyrazolylène-4,5, qui est substitué en position 3 par un groupe méthyle, carboxy, carbamoyle, alcoxycarbonyle inférieur, phényle ou sulfophényle et contient en position 1 le noyau phényle ou le noyau naphtyle lié, le radical phényle pouvant être substitué par 1 ou 2 groupes sulfo et/ou un ou deux substituants du groupe comprenant les substituants alkyle inférieur, alcoxy inférieur, chloro, bromo, nitro, acétylamino et carboxy, et le noyau naphtyle pouvant être substitué par 1, 2 ou 3 groupes sulfo et/ou un substituant du groupe comprenant les substituants alkyle inférieur, alcoxy inférieur, nitro, acétylamino et carboxy, ou bien

K représente, en tant que résidu d'un composant de copulation, le radical acétoacétylanilide ou -naphtylamide, le radical phényle pouvant être substitué par 1 ou 2 substituants qui appartiennent au groupe comprenant les substituants alkyle inférieur, alcoxy inférieur, carboxy, acétylamino, benzoylamino, carbamoyle, carbamoyle mono- ou disubstitué par un groupe alkyle inférieur, benzyle et/ou phényle; sulfamoyle, sulfamoyle mono- ou disubstitué par un groupe alkyle inférieur, benzyle et/ou phényle; cyano, nitro, chloro, bromo, trifluorométhyle et sulfo; dans

K l'atome d'oxygène complexant étant dans chaque cas lié, en position ortho par rapport au groupe azo et au radical chlorotriazinylamino, à l'un des noyaux aromatiques de K,

$R^2$ étant un atome d'hydrogène, un groupe alkyle inférieur ou un groupe alkyle inférieur substitué par un radical hydroxy, sulfo ou sulfato, ou alcoxy inférieur;

$R^3$ étant un atome d'hydrogène, un groupe alkyle inférieur, un groupe alkyle inférieur substitué par un radical hydroxy, sulfo, sulfato ou alcoxy inférieur, ou encore le radical phényle, qui peut être substitué par des substituants du groupe comprenant les substituants sulfo, méthyle, méthoxy, éthoxy, acétylamino, uréido, carboxy, carbamoyle, chloro, sulfométhyle et sulfamoyle, ou bien représentant le radical naphtyle, qui peut être substitué par 1, 2 ou 3 groupes sulfo,

R et Z ayant la signification donnée dans la revendication 1.

5. Composés selon la revendicaton 1, de formule générale

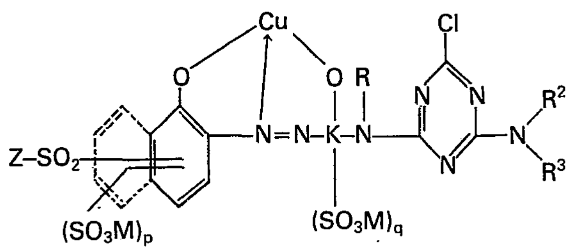

dans laquelle

R et Z ont la signification donnée dans la revendication 1 et

K est le résidu d'un composant de copulation, copulant en position ortho par rapport au groupe hydroxy-phénolique ou énolique, de la série du naphtalène ou de la pyrazolone,

p est le nombre zéro, 1 ou 2 et

q est le nombre zéro, 1 ou 2, la somme (p + q) étant égale à 2, 3 ou 4,

$R^2$ étant un atome d'hydrogène ou le groupe méthyle ou éthyle, et

$R^3$ étant un atome d'hydrogène, le groupe sulfoéthyle ou le radical phényle, qui peut être substitué par des substituants du groupe comprenant les substituants sulfo, méthyle, méthoxy, acétylamino, carboxy, chloro et sulfamoyle, ou bien représentant le radical naphtyle qui peut être substitué par 1 ou 2 groupes sulfo, et

M représentant un atome d'hydrogène ou l'équivalent d'un métal monovalent, bivalent ou trivalent, le résidu dessiné en tirets d'un noyau benzénique représentant, avec le

noyau benzénique qui lui est lié, le radical naphtalène correspondant.

6. Composés phénylazonaphtyliques, naphtylazonaphtyliques, phénylazopyrazolyliques et naphtylazopyrazolyliques à complexe de cuivre selon la revendication 1, de formule générale

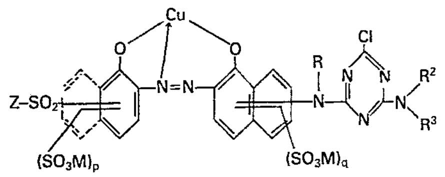

ou

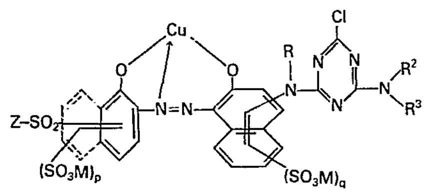

ou

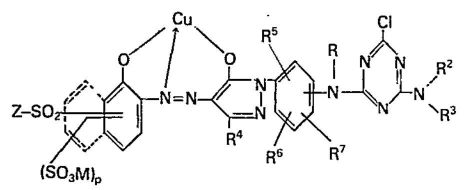

dans lesquelles le résidu dessiné en tirets d'un noyau benzénique forme, avec le noyau benzénique qui lui est lié, le radical naphtalène correspondant, et où

- R, $R^2$, $R^3$ et Z ont la signification donnée dans les revendications 1, 4 ou 5,
- p vaut le nombre zéro ou 1 et
- q vaut le nombre 1 ou 2, la somme (p + q) étant égale à 2 ou 3,
- $R^4$ étant un groupe méthyle, carboxy, alcoxycarbonyle inférieur ou carboxamide,
- $R^5$ étant un atome d'hydrogène, le groupe sulfo, un groupe alkyle ayant de 1 à 4 atomes de carbone ou un atome de chlore,
- $R^6$ est un atome d'hydrogène, un groupe alkyle ayant de 1 à 4 atomes de carbone ou un atome de chlore, et
- $R^7$ est un atome d'hydrogène, un groupe alkyle ayant de 1 à 4 atomes de carbone ou le groupe sulfo,
- $R^4$, $R^5$, $R^6$ et $R^7$ pouvant avoir la même signification ou des significations différentes les uns des autres,
- M ayant la signification donnée dans la revendication 5.

7. Composés selon les revendications 1, 3 ou 4, caractérisés en ce que D est ici un noyau naphthalène, qui peut être substitué par un ou deux groupes sulfo.

8. Composés selon les revendications 1, 3, 4 ou 7, caractérisés en ce que K est ici le résidu du N-(monosulfo- ou disulfonaphtyl)acétoacétylamide.

9. Composés selon la revendication 1, de formule générale

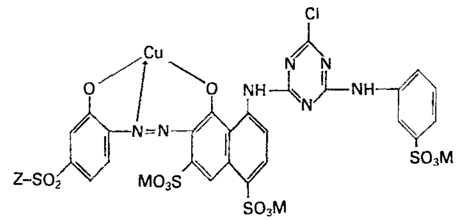

dans laquelle M et Z ont la signification donnée respectivement dans les revendications 1 et 5.

10. Composés selon la revendication 1, de formule générale

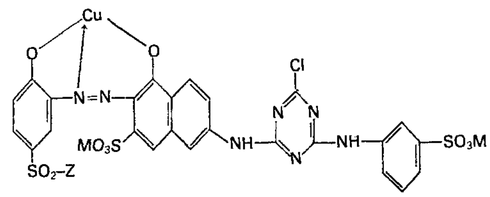

dans laquelle M et Z ont la signification donnée respectivement dans les revendications 1 et 5.

11. Composés selon la revendication 1, de formule générale

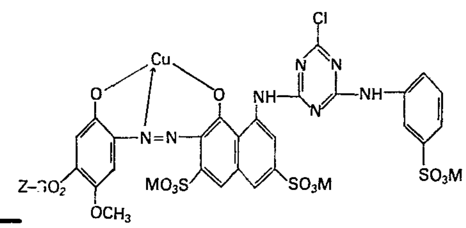

dans laquelle M et Z ont la signification donnée respectivement dans les revendications 1 et 5.

12. Composés selon la revendication 1, de formule générale

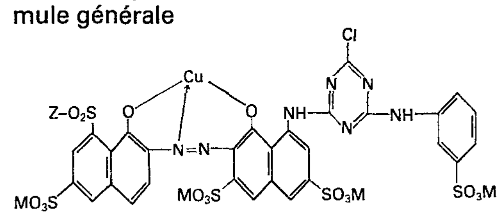

dans laquelle M et Z ont la signification donnée respectivement dans les revendications 1 et 5.

13. Composés selon la revendication 1, de formule générale

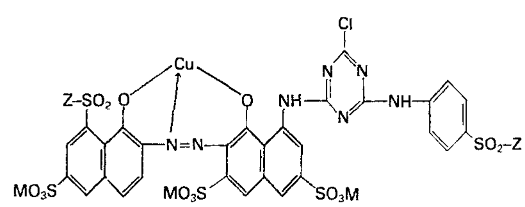

dans laquelle M et Z ont la signification donnée respectivement dans les revendications 1 et 5.

14. Composés selon l'une des revendications 1 à 13, caractérisés en ce que Z est le groupe sulfato-2 éthyle ou le groupe vinyle.

15. Composés selon l'une des revendications 5 à 14, caractérisés en ce que M est l'hydrogène, le sodium ou le potassium.

16. Procédé pour la préparation de composés de formule générale (1) selon la revendication 1, caractérisé en ce qu'on fait réagir un composé monoazoïque à complexe de cuivre de formule générale (5)

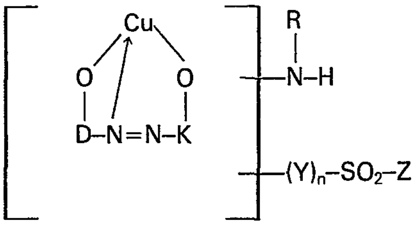

(5)

dans laquelle D, K, R, Y, Z et n ont la signification donnée dans la revendication 1, les groupes de formule générale (4)

$$-(Y)_n-SO_2-Z \qquad (4)$$

et de formule générale –NHR étant liés à D et K, séparément ou simultanément sur ces derniers, en une quantité équimolaire sur un composé de dichloro-2,4 s-triazine de formule générale (6)

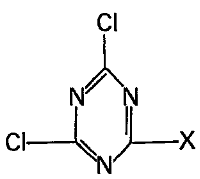

(6)

dans laquelle X a la signification donnée à la revendication 1; ou bien qu'on fait réagir un composé monoazoïque à complexe de cuivre ayant la formule (5) ci-dessus, en une quantité équimolaire, sur de la trichloro-2,4,6 s-triazine, et qu'on condense le composé dichlorotriazinylamino ainsi obtenu, de formule générale (7)

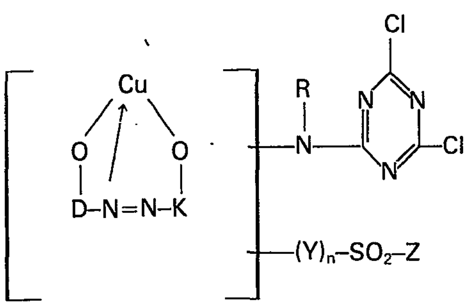

(7)

dans laquelle D, K, R, Y, Z et n ont la signification donnée dans la revendication 1, les radicaux correspondant à la formule générale donnée ci-dessus (4) et à la formule générale (9) ci-après

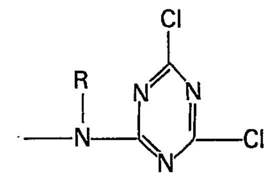

(9)

où R a la signification donnée dans la revendication 1, étant liés à D et K, séparément l'un de l'autre, ou simultanément à D ou K, en une quantité équimolaire avec une amine de formule générale (8)

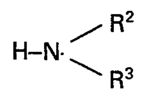

(8)

dans laquelle $R^2$ et $R^3$ ont la signification donnée dans la revendication 1; ou bien qu'on convertit, à l'aide d'un agent cédant du cuivre, en le composé à complexe de cuivre, un composé de formule générale

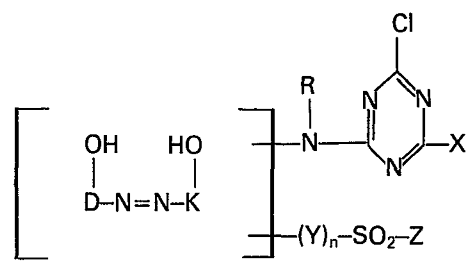

dans laquelle D, K, R, X, Y, Z et n ont la signification donnée dans la revendication 1, les radicaux correspondant à la formule générale $-(Y)_n-SO_2-Z$ et à la formule générale (3) étant liés à D et K séparément l'un de l'autre, ou simultanément à D ou K.

17. Utilisation des composés de formule générale (1) mentionnés et définis dans la revendication 1, en tant que colorants.